# EUROPÄISCHE PATENTSCHRIFT

(11) **EP 3 207 225 B1**
(45) Veröffentlichungstag und Bekanntmachung des Hinweises auf die Patenterteilung: **14.09.2022**
(21) Anmeldenummer: 15790029.1
(22) Anmeldetag: 16.10.2015
(51) Int. Cl.: F01K 3/00, F01K 23/10

(54) **VERFAHREN ZUM AUSGLEICH VON LASTSPITZEN BEI DER ENERGIEERZEUGUNG UND/ODER ZUR ERZEUGUNG VON ELEKTRISCHER ENERGIE UND/ODER ZUR WASSERSTOFFERZEUGUNG**
METHOD FOR COMPENSATING LOAD PEAKS DURING ENERGY GENERATION AND/OR FOR GENERATING ELECTRICAL ENERGY AND/OR FOR GENERATING HYDROGEN
PROCÉDÉ PERMETTANT DE COMPENSER DES POINTES DE CHARGE LORS DE LA PRODUCTION D'ÉNERGIE ET/OU DE PRODUIRE DE L'ÉNERGIE ÉLECTRIQUE ET/OU DE PRODUIRE DE L'HYDROGÈNE

(30) Priorität: 17.10.2014 DE 102014015323; 25.11.2014 DE 102014017346
(43) Veröffentlichungstag der Anmeldung: 23.08.2017
(73) Patentinhaber: Carbon-Clean Technologies GmbH, 50825 Köln (DE)
(72) Erfinder: KNOP, Klaus, 79295 Sulzburg (DE); PFAB, Robert Joseph, 50968 Köln (DE); ZOELLNER, Lars, 50678 Köln (DE)
(74) Vertreter: Schleitzer, Dirk-Karsten
(86) Internationale Anmeldenummer: PCT/EP2015/002050
(87) Internationale Veröffentlichungsnummer: WO 2016/058701

(56) Entgegenhaltungen:
- EP-A1- 2 698 505
- DE-A1- 3 931 582
- US-A- 4 161 211
- US-A1- 2012 137 702
- US-B1- 7 444 818

## Beschreibung

Die Erfindung betrifft ein Verfahren zum Ausgleich von Lastspitzen bei der Erzeugung von elektrischer Energie und/oder zur insbesondere dezentralen Erzeugung von elektrischer Energie, weiter insbesondere aus regenerativ erzeugten Energieträgern, wie Biogas aus der Biomassevergärung oder Synthesegas aus der Biomassevergasung, oder aus fossilen Energieträgern, wie Erdgas, durch Nutzung der Wärme von erhitztem Trägergas für die Stromerzeugung, insbesondere in einem thermoelektrischen Speicherkraftwerk, und/oder zur Nutzung der Wärme von erhitztem Trägergas für die Wasserstofferzeugung, insbesondere in einem Vergasungsprozess. Darüber hinaus betrifft die Erfindung ein thermoelektrisches Speicherkraftwerk.

Ein Kraftwerk, das Speichereinrichtungen für thermische Energie aufweist, ist aus der US 2012/0137702 A1 bekannt. Bei diesem Kraftwerk wird Biomasse in einem Gasbrenner verbrannt und das Rauchgas im Anschluss durch ein Wärmespeichermodul geleitet, das einen Großteil der Energie des Rauchgases in Form von Wärme speichert. Ist das Wärmespeichermodul vollständig beladen, werden Ventile betätigt, worauf das Rauchgas einem zweiten, leeren Speichermodul zugeführt wird, so dass im Folgenden das zweite Speichermodul beladen wird. Während das zweite Speichermodul beladen wird, wird ein Wasserluftgemisch durch das erste Speichermodul geleitet. Das erste Speichermodul wird hierbei entladen. Der entstehende Dampf wird in einer nachgeschalteten Turbine entspannt und die frei werdende Energie kann so in Strom umgewandelt werden. Die beiden Speichermodule werden abwechselnd be- und entladen. Die Speichermodule erfüllen den Zweck, die im Rauchgas enthaltene Energie der Turbine zuzuführen, ohne dass das Rauchgas in die Turbine geleitet werden muss, was zur Beschädigung der Turbine führen könnte.

In der EP 2 698 505 A1 ist ein Verfahren zum Beladen und Entladen eines Wärmespeichers beschrieben. Im Falle einer Energieüberproduktion, beispielsweise durch ein Windrand, kann der Wärmespeicher beladen werden. Im Bedarfsfall wird dieser Prozess umgekehrt, so dass der Wärmespeicher in einem Entladezyklus entladen wird und mittels der thermischen Energie Strom gewonnen und in das Netz eingespeist werden kann.

Ein Kraftwerk mit zwei Wärmespeichermodulen ist aus der US 7 444 818 B1 bekannt. Ein zuvor verdichtetes Gas wird durch ein erstes Wärmespeichermodul geleitet, das zuvor beladen wurde, und wird dadurch erhitzt In einer ersten Niederdruckturbine wird das Gas entspannt und anschließend einer Brennkammer zugeführt. Das dort entstehende Rauchgas wird durch ein zweites Wärmespeichermodul geleitet und gibt dort Wärme an dieses ab, wodurch das zweite Wärmespeichermodul beladen wird. Das Rauchgas wird anschließend mit Wasser versetzt und der überhitzte Dampf einer Hochdruckturbine zugeführt. Das erste Speichermodul wird, wie zuvor beschrieben, entladen, während das zweite Speichermodul beladen wird. Ist das zweite Wärmespeichermodul vollständig beladen, werden Ventile umgeschaltet, so dass im Folgenden das erste Wärmespeichermodul beladen und das zweite Wärmespeichermodul entladen wird. Die Wärmespeichermodule sorgen damit für eine Vorwärmung des Gases vor der ersten Turbine.

Der Ausbau erneuerbarer Energien führt zu einer Veränderung der Erzeugungsstruktur im Strommarkt. Angebotsabhängige elektrische Energie aus erneuerbaren Energiequellen, wie Windkraft, Biomasse und Photovoltaik, wird zukünftig einen Großteil der Stromversorgung ausmachen. Die verfügbaren Technologien zur Stromerzeugung aus regenerativen Energiequellen lassen eine genaue Vorhersage der erzeugten Strommengen jedoch nur eingeschränkt zu, weshalb Fluktuationen auf unterschiedlichen Zeitskalen auftreten, nämlich von saisonalen Schwankungen über den Tagesverlauf bis hin zu kurzfristigen Schwankungen. Diese Fluktuationen verstärken die in der Stromnachfrage auftretenden Schwankungen und erhöhen den Bedarf an Ausgleichsmöglichkeiten für Lastspitzen. Der Ausgleich von Lastspitzen findet derzeit in der Regel über verschiedene Strommärkte statt, an derem Handel Betreiber unterschiedlicher Erzeugungs- und Speichertechnologien teilnehmen. Darüber hinaus steht das Energiesystem vor einer Umstellung von einer zentralen hin zu einer dezentralen Erzeugung von elektrischer Energie aus fossilen und regenerativ erzeugten Energieträgern Daraus ergeben sich neue Anforderungen an die Netzinfrastruktur, da sich die Aufgabe der Netzstabilisierung zunehmend von der Übertragungsnetzebene auf die Ebene der Verteilnetze verlagert.

In diesen ist jedoch bislang wenig bis keine Infrastruktur zur aktiven Steuerung der Netze vorhanden.

Aufgabe der vorliegenden Erfindung ist es, ein Verfahren und ein Speicherkraftwerk jeweils der eingangs genannten Art zur Verfügung zu stellen, die bei hoher Wirtschaftlichkeit und hohem Wirkungsgrad den Ausgleich von Erzeugungsspitzen und Erzeugungstälern bei der Erzeugung von elektrischer Energie ermöglichen und damit im Stromnetz einen Beitrag zum Lastmanagement leisten können, wobei in Zeiten hoher Stromerzeugung und geringem Strombedarf Energie gespeichert und bei Lastspitzen wieder abgegeben wird. Insbesondere sollen der Abbau von Überkapazitäten im Stromnetz und die Zurverfügungstellung von elektrischer Leistung bei kurzzeitigen hohen Verbrauchsspitzen in möglichst kurzer Zeit möglich sein. Darüber hinaus sollen das Verfahren und Speicherkraftwerk die insbesondere dezentrale Stromerzeugung und/oder die Wasserstofferzeugung bei hoher Wirtschaftlichkeit und hohem Wirkungsgrad ermöglichen.

Die vorgenannten Aufgaben werden durch Verfahren mit den Merkmalen von Patentanspruch 1, von Patentanspruch 5 und von Patentanspruch 10 sowie durch ein Speicherkraftwerk mit den Merkmalen von Patenanspruch 13 gelöst. Vorteilhafte Ausgestaltungen ergeben sich aus den Unteransprüchen.

Das erfindungsgemäße Verfahren ermöglicht eine Nutzung der Wärme von hocherhitztem Trägergas, insbesondere von Heißluft, für die Stromerzeugung in einem Kraftwerksprozess oder für die Wasserstofferzeugung, insbesondere in einem Vergasungsprozess, wobei in wenigstens einem Gaserhitzer eines Speicherkraftwerks zunächst ein Trägergas, wie Luft, auf eine bestimmte Beladungs-Solltemperatur erwärmt wird. Das heiße Trägergas dient zur thermischen Beladung von wenigstens einem Wärmespeichermodul einer Mehrzahl von Wärmespeichermodulen des Speicherkraftwerkes, wobei es zu einer Wärmeabgabe von dem heißen Trägergas aus den Gaserhitzer an ein Wärmespeichermaterial des Wärmespeichermoduls kommt (Beladungszyklus). Um Heißgas in ausreichender Menge und/oder mit einer ausreichend hohen Beladungs-Solltemperatur für die Beladung der Wärmespeichermodule zu erzeugen, können mehrere Gaserhitzer eingesetzt werden. Eine maximale Beladungs-Solltemperatur bei der Erhitzung des Trägergases in dem Gaserhitzer kann 1000 °C bis 1300 °C, vorzugsweise 1100 °C bis 1200 °C, betragen. Jedem Wärmespeichermodul kann ein separater Gaserhitzer zugeordnet sein.

Bei der zeitversetzten thermischen Entladung von wenigstens einem Wärmespeichermodul, vorzugsweise einer Mehrzahl von Wärmespeichermodulen, wird die gespeicherte nutzbare Wärme bzw. der nutzbare Wärmeinhalt des Wärmespeichermoduls zur Erwärmung von kaltem Trägergas, insbesondere von Kaltluft, genutzt, wobei wenigstens ein Wärmespeichermodul von kaltem Trägergas durchströmt und Wärme von dem Wärmespeichermaterial an das Trägergas übertragen wird (Entladungszyklus). Das Trägergas wird beim Durchströmen des Wämespeichermoduls auf eine bestimmte Entladungstemperatur erhitzt und tritt auf diesem Temperaturniveau aus dem Wärmespeichermodul aus. Die für eine Wärmenutzung erforderliche Entladungs-Solltemperatur kann wenigstens 500 °C, vorzugsweise wenigstens 600 °C, bis 900 °C, weiter vorzugsweise bis 800 °C, betragen. Die Wärme des bei einem Entladungszyklus erzeugten heißen Trägergases wird dann in einem Kraftwerks- oder Vergasungsprozess genutzt. Sowohl der Beladungszyklus als auch der Entladungszyklus können mit einer teilweisen oder vollständigen Be- bzw. Entladung eines Wärmespeichermoduls verbunden sein. Der nutzbare Wärmeinhalt eines Wärmespeichermoduls ergibt sich dabei aus der spezifischen Wärmekapazität des Wärmespeichermaterials, der Masse des Wärmespeichermaterials bzw. der Größe des Wärmespeichermoduls und der (mittleren) Wärmespeichertemperatur, die bei einem Be- oder Entladungszyklus bzw. vorgang erreicht wird.

Für eine Nutzung der Wärme des Trägergases zur Stromerzeugung in einem Kraftwerksprozess kann vorgesehen sein, dass Wärme von in wenigstens einem Wärmespeichermodul erhitztem Trägergas an ein Arbeitsfluid des Kraftwerksprozesses, insbesondere an ein Arbeitsfluid eines Dampfkraftprozesses, übertragen wird. Vorzugsweise handelt es sich bei dem Arbeitsfluid um Wasser. Insbesondere kann eine Nutzung der an das Trägergas übertragenen Wärme in einem konventionellen Dampfkraftwerk vorgesehen sein, wobei die Leistungsklasse des Kraftwerks mehr als 5 MW, vorzugsweise mehr als 10 MW, weiter vorzugsweise mehr als 50 MW, besonders bevorzugt mehr als 100 MW, beträgt. Die Leistungsklasse kann jedoch auch mehrere 100 MW betragen. In einem Dampfkraftprozess kann die Wärme des Trägergases zur Dampferzeugung, zur Speisewasservorwärmung und/oder zur Dampfüberhitzung genutzt werden. Grundsätzlich ist es jedoch auch möglich, die an das Trägergas übertragene Wärme in Form von Heißluft der Brennkammer eines (konventionellen) Kohlekraftwerks und/oder eines GuD-Kraftwerks zuzuführen, um einen Brennstoff, wie Kohle oder Gas, zu verbrennen. Hierbei kann die Leistungsklasse des Kohlekraftwerks und/oder des GuD-Kraftwerks vorzugsweise der oben genannten Leistungsklasse eines Dampfkraftwerks entsprechen. Alternativ lässt die Erfindung auch eine Nutzung der an das Trägergas übertragenen Wärme in einem Vergasungsprozess zu, um Wasserstoff zu erzeugen. Beispielsweise kann mit der Wärme Dampf erzeugt werden, der dann in einem allothermen Vergasungsprozess von Kohle eingesetzt wird.

Das erfindungsgemäße thermoelektrische Speicherkraftwerk kann wenigstens einen Verdichter zur Verdichtung des Trägergases, wenigstens einen Gaserhitzer zur Erhitzung des Trägergases, eine Mehrzahl von Wärmespeichermoduien zur Speicherung der Wärme von erhitztem Trägergas und wenigstens einen Wärmeübertrager, wie einen Dampferzeuger, zur Übertragung der Wärme von erhitztem Trägergas an ein Arbeitsfluid eines Dampfkraftprozesses aufweisen. Es versteht sich, dass das erfindungsgemäße Speicherkraftwerk darüber hinaus weitere aus dem Stand der Technik bekannte Komponenten eines Dampfkraftwerkes aufweisen kann, wie beispielsweise eine Speisewasserpumpe, einen Kondensator und eine Dampfturbine.

Erfolgt die Erwärmung des Trägergases in dem Gaserhitzer durch Umwandlung von elektrischer Energie in thermische Energie, wobei der Gaserhitzer zu diesem Zweck wenigstens einen elektrischen Heizwiderstand aufweisen kann, können das erfindungsgemäße Verfahren und das erfindungsgemäße Speicherkraftwerk einen Beitrag zum Lastmanagement im Stromnetz leisten, wobei zu Zeiten hoher Stromerzeugung und geringem Strombedarf während eines Beladungszyklus elektrische Energie in Form von Wärme gespeichert wird. Bei Lastspitzen wird dann in einem Entladungszyklus wenigstens ein Wärmespeichermodul entladen und das so erzeugte heiße Trägergas zur Stromerzeugung eingesetzt, beispielsweise zur Verdampfung von Wasser für einen Dampfkraftprozess. Die erzeugte elektrische Energie kann wieder in das Stromnetz abgegeben werden. Ein Betreiber des erfindungsgemäßen Speicherkraftwerkes kann Systemdienstleistungen anbieten und am Regelenergiemarkt teilnehmen. Durch die eingesetzten Wärmespeichermodule ist eine einfache und kostengünstige Speicherung von elektrischer Energie in Form von Wärme möglich, wobei elektrische Leistung bei kurzzeitigen hohen Verbrauchsspitzen flexibel und in sehr kurzer Zeit sowie kostengünstig zur Verfügung gestellt werden kann.

Besonders bevorzugt ist eine rein elektrische Erhitzung des Trägergases in wenigstens einem elektrischen Lufterhitzer durch Umwandlung von elektrischer Energie in thermische Energie vorgesehen. Es ist dann für die Erzeugung von heißem Trägergas nicht erforderlich, einen Brennstoff zu verbrennen, so dass eine zusätzliche Freisetzung von Kohlendioxid vermieden wird.

Die Erzeugung eines heißen Trägergases kann alternativ oder ergänzend auch durch Verbrennung von wenigstens einem Energieträger in wenigstens einer Brennkammer des Gaserhitzers erfolgen, beispielsweise durch Verbrennung von Biogas aus der Biomassevergärung und/oder Synthesegas aus der Biomassevergasung. Auch eine Erdgasnutzung ist möglich und von Vorteil. Es versteht sich, dass eine Energieerzeugung auch unter Einsatz von weiteren fossilen Energieträgern, wie Synthesegasen aus der Kohlevergasung, möglich ist. Auch feste Brennstoffe sind einsetzbar. Das erfindungsgemäße Kraftwerk kann damit zur Grundlastdeckung beitragen, beispielsweise in der Nähe einer Biogasanlage, was eine kostengünstige Stromerzeugung zulässt. Insbesondere zeichnet sich das erfindungsgemäße Kraftwerk für einen Inselbetrieb aus, wobei Strom aus vorzugsweise regenerativ erzeugten Brennstoffen dezentral erzeugt wird.

Es kann zweckmäßig sein, wenn die Heißgaserzeugung im Lufterhitzer gleichermaßen durch Umwandlung elektrischer Energie in thermische Energie und durch Verbrennung wenigstens eines Energieträgers möglich ist. Damit sind eine bedarfsweise Unterstützung der Netzinfrastruktur durch Ausgleich von Lastspitzen und die Stromerzeugung für eine Grundlastdeckung möglich.

Nicht ausgeschlossen ist, dass auch Ab- oder Prozesswärme eines Sekundärprozesses in dem Gaserhitzer zur Heißgaserzeugung genutzt wird.

Bei einer zweckmäßigen Ausführungsform des erfindungsgemäßen Verfahrens können mehrere in Reihe geschaltete Wärmespeichermodule eine Wärmespeicherreihe bilden, wobei ein Trägergas in wenigstens einem Gaserhitzer auf eine bestimmte Beladungs-Solltemperatur erwärmt wird und nachfolgend mehrere Wärmespeichermodule der Wärmespeicherreihe, insbesondere alle Wärmespeichermodule, durchströmt. Die Wärmespeichermodule werden dadurch in Abhängigkeit von der Größe des Heißgasvolumenstroms, der Höhe der Beladungs-Solltemperatur des heißen Trägergases beim Austritt aus dem Gaserhitzer, der Größe des jeweiligen Wärmespeichermoduls und/oder der Wärmekapazität des eingesetzten Wärmespeichermaterials auf gleiche oder unterschiedliche Wärmespeichertemperaturen erwärmt bzw. "beladen". Vorzugsweise sind alle Wärmespeichermodule hierbei gleich ausgebildet und weisen in einem voll beladenen Zustand gleich große nutzbare Wärmeinhalte auf.

Bei einer besonders bevorzugten Ausführungsform ist eine wenigstens paarweise Ansteuerung von mehreren Wärmespeichermodulen vorgesehen. Die wenigstens paarweise Ansteuerung von Wärmespeichermodulen vereinfacht im Hinblick auf die erforderlichen Rohrleitungslängen den konstruktiven Aufbau der Wärmespeichermodule und deren Verschaltung und ermöglicht damit eine kostengünstige Fertigung der Module.

Bei einer "paarweisen Ansteuerung" im Sinne der Erfindung werden wenigstens zwei Wärmespeichermodule, vorzugsweise genau zwei Wärmespeichermodule, für eine Beladung gemeinsam angesteuert, d.h. für eine gemeinsame Beladung in Reihenschaltung für die Durchströmung mit heißem Trägergas freigegeben. Wenigstens zwei Wärmespeichermodule können ein Wärmespeicherpaar bilden. Mehrere Wärmespeicherpaare eines Wärmespeichersystems können unabhängig voneinander bzw. separat ansteuerbar sein. Dies kann durch eine geeignete Leitungsführung und Ventilsteuerung im Wärmespeichersystem erreicht werden. Bei der Beladung eines Wärmespeicherpaars können dann die Wärmespeichermodule des jeweiligen Wärmespeicherpaars jeweils in Reihe angeordnet sein und nachfolgend vom Trägergas durchströmt werden. Entsprechend kann eine paarweise Ansteuerung bei der Entladung der Wärmespeichermodule vorgesehen sein.

Grundsätzlich ist auch eine separate Ansteuerung von Wärmespeichermodulen bei der Be- und/oder Entladung möglich, wobei dann jedes einzelne Wärmespeichermodul bedarfsweise angesteuert, d.h. für eine Durchströmung mit Trägergas freigegeben werden kann.

Zumindest in das erste Wärmespeichermodul einer Wärmespeicherreihe kann heißes Trägergas aus einem Gaserhitzer mit einer hohen, vorzugsweise einer maximalen, Beladungs-Solltemperatur eintreten, wobei sich das heiße Trägergas bei der Beladung des ersten Wärmespeichermoduls abkühlt und mit einer tieferen Austrittstemperatur aus dem Wärmespeichermodul austritt. Das Trägergas wird danach dem nachfolgenden Wärmespeichermodul der Wärmespeicherreihe zur Beladung zugeführt. Mit zunehmendem Beladungsgrad eines Wärmespeichermoduls bzw. mit zunehmender Wärmeaufnahme der Speichermasse steigt während eines Beladungszyklus die Austrittstemperatur des aus dem jeweiligen Wärmespeichermodul ausströmenden Trägergases an. Die Austrittstemperatur des Trägergases beim Austritt aus einem vorhergehenden Wärmespeichermodul entspricht dabei vorzugsweise im Wesentlichen der Eintrittstemperatur des Trägergases beim Eintritt in das nachfolgende Wärmespeichermodul. Vorzugsweise erwärmen sich die Wärmespeichermodule einer Wärmespeicherreihe während eines Beladungszyklus unterschiedlich stark, wobei der während eines Beladungszyklus erreichte und bei der Entladung nutzbare Wärmeinhalt der Wärmespeichermodule und, vorzugsweise, die Wärmespeichertemperatur, in Strömungsrichtung des Trägergases von Wärmespeichermodul zu Wärmespeichermodul schrittweise abnehmen. Entsprechend nimmt die Austrittstemperatur des Trägergases von Wärmespeichermodul zu Wärmespeichermodul ab.

Weiter vorzugsweise wird bei jedem Beladungszyklus wenigstens ein letztes Wärmespeichermodul der Wärmespeicherreihe nicht vollständig beladen. Das Trägergas kann dann am Ende eines Beladungszyklus aus diesem Wärmespeichermodul kalt, das heißt bei einer Austrittstemperatur von beispielsweise kleiner als 100 °C, vorzugsweise von kleiner als 50 °C, insbesondere von kleiner als 30 °C, austreten. Durch die beschriebene Vorgehensweise bei der Beladung ist eine einfache und kostengünstige Speicherung von elektrischer Energie möglich, wobei die in dem Trägergas enthaltene Wärme weitgehend vollständig in den Wärmespeichermodulen gespeichert und kurzfristig wieder zur Verfügung gestellt werden kann.

Das aus einem Wärmespeichermodul bei dessen Beladung austretende Trägergas kann zur Beladung eines nachfolgenden Wärmespeichermoduls der Wärmespeicherreihe genutzt werden, bis die Austrittstemperatur des Trägergases aus dem vorhergehenden Wärmespeichermodul eine vorgegebene Mindestaustrittstemperatur unterschreitet. Die Mindestaustrittstemperatur kann weniger als 200 °C, vorzugsweise weniger als 100 °C, weiter vorzugsweise weniger als 50 °C, besonders bevorzugt weniger als 30 °C, betragen. Ist die Mindestaustrittstemperatur noch ausreichend hoch, kann das aus einem Wärmespeichermodul austretende Trägergas für Warmhaltezwecke, beispielsweise im Dampfkraftprozess, genutzt werden.

Bei der Beladung mehrerer in Reihe geschalteter Wärmespeichermodule kann die Beladung eines nachfolgenden Wärmespeichermoduls der Wärmespeicherreihe zumindest teilweise auch durch direkte Zufuhr von heißem Trägergas aus einem Gaserhitzer erfolgen, insbesondere, wenn die Austrittstemperatur des Trägergases aus einem vorhergehenden Wärmespeichermodul der Wärmespeicherreihe eine vorgegebenen Mindestaustritttemperatur unterschreitet. Das direkt zugeführte heiße Trägergas aus dem Gaserhitzer kann dabei die Beladungs-Solltemperatur aufweisen, die im Gaserhitzer maximal erreicht wird, so dass eine vorzugsweise vollständige Beladung eines nachfolgenden Wärmespeichermoduls möglich ist. Unterschreitet die Austrittstemperatur des Trägergases aus einem vorhergehenden Wärmespeichermodul eine vorgegebene Mindesttemperatur nicht, ist jedoch nicht ausreichend hoch, um eine vollständige Beladung des nachfolgenden Wärmespeichermoduls zu ermöglichen, kann die Beladung des nachfolgenden Wärmespeichermoduls durch das Trägergas aus einem vorhergehenden Wärmespeichermodul der Wärmespeicherreihe und durch Zufuhr von heißem Trägergas aus dem Gaserhitzer erfolgen. Durch die direkte Zufuhr von heißem Trägergas lässt sich somit in einfacher Weise ein bestimmter hoher Beladungszustand des nachfolgenden Wärmespeichermoduls erreichen.

Grundsätzlich ist es auch möglich, dass mehrere Wärmespeichermodule parallel beladen werden, wobei jedem Wärmespeichermodul ein separater heißer Trägergasstrom zugeführt wird. Vorzugsweise kann auch hier eine wenigstens paarweise Ansteuerung von mehreren Wärmespeichermodulen vorgesehen sein. Beispielsweise können jeweils wenigstens zwei Wärmespeichermodule eine Wärmespeichereinheit bzw. ein Wärmespeicherpaar bilden. Mehrere Wärmespeichereinheiten können parallel beladen werden, wobei die jeweiligen Wärmespeichermodule einer Wärmespeichereinheit aber in Reihe geschaltet sind und nachfolgend vom Trägergas durchströmt werden. Die Wärmespeichereinheiten lassen sich vorzugsweise unabhängig voneiander ansteuern. Eine entsprechende Steuerung kann für die Entladung vorgesehen sein.

Zur Erzeugung separater Trägergasströme können mehrere Gaserhitzer vorgesehen sein, wobei jedem Wärmespeichermodul wenigstens ein Gaserhitzer zugeordnet sein kann. Aus jedem Gaserhitzer tritt ein Trägergasstrom mit einer bestimmten Beladungs-Solltemperatur zur Beladung des zugeordneten Wärmespeichermoduls aus. Die Beladungs-Solltemperaturen der Trägergasströme können gleich oder unterschiedlich hoch sein. Vorzugsweise wird in allen Gaserhitzern eine maximale Beladungs-Solltemperatur zwischen 1000 °C und 1300 °C erreicht. Die parallele Beladung mehrerer Wärmespeichermodule ermöglicht insbesondere eine gleichzeitige hohe, vorzugsweise vollständige, Beladung der Wärmespeichermodule in sehr kurzer Zeit.

Zur Erzeugung eines erhitzten Trägergasstroms für die Wärmebereitstellung im Kraftwerks- und/oder Vergasungsprozess können mehrere Wärmespeichermodule parallel entladen werden, wobei jedem Wärmespeichermodul ein separater kalter Trägergasstrom zugeführt werden kann. Um Heißgas einer vorgegebenen Entladungs-Solltemperatur für die Wärmenutzung im Kraftwerks- und/oder Vergasungsprozess bereitzustellen, ist es zweckmäßig, wenn wenigstens ein Wärmespeichermodul mit einer geringeren Wärmespeichertemperatur und wenigstens ein Wärmespeichermodul mit einer höheren Wärmespeichertemperatur parallel entladen werden und dass das so erzeugte erhitzte Trägergas aus beiden Wärmespeichermodulen zur Einstellung einer vorgegebenen Entladungs-Solltemperatur zusammengeführt wird. Vorzugsweise ist vorgesehen, dass ein Wärmespeichermodul mit der vergleichsweise geringsten Wärmespeichertemperatur und wenigstens ein Wärmespeichermodul mit einer vergleichsweise nächsthöheren Wärmespeichertemperatur einer Mehrzahl von Wärmespeichermodulen parallel entladen werden, um einen Trägergasstrom mit einer gewünschten Entladungs-Solltemperatur bereitzustellen. Das Entladen der Wärmespeichermodule erfolgt vorzugsweise gleichzeitig. Im Ergebnis werden wenigstens zwei unterschiedlich heiße Trägergasströme gemischt, um eine bestimmte für die nachfolgende Wärmeübertragung an den Kraftwerksund/oder Vergasungsprozess erforderliche Entladungs-Solltemperatur des Trägergases einzustellen bzw. einzuregeln. Diese Entladungs-Solltemperatur kann durch eine geeignete Mengenregelung der zusammengeführten Trägergasströme über den gesamten Entladezyklus der Wärmespeichermodule konstant gehalten werden. Die Vermischung von unterschiedlich warmen Trägergasströmen erlaubt eine einfache Regelung der Entladungs-Solltemperatur und ermöglicht das vollständige Entladen von Wärmespeichermodulen, deren Wärmeinhalt zu gering ist, um einen bestimmten Trägergasstrom auf die Entladungs-Solltemperatur zu erhitzen. Ein beladenes Wärmespeichermodul mit einem geringeren Wärmeinhalt und/oder mit einer geringeren Wärmespeichertemperatur kann somit bei einem Entladungszyklus als Bypass für ein beladenes Wärmespeichermodul mit einem höheren Wärmeinhalt und/oder einer höheren Wärmespeichertemperatur genutzt werden.

Alternativ und/oder ergänzend kann eine Zusammenführung von bei der Entladung von wenigstens einem Wärmespeichermodul erhitztem Trägergas mit kaltem Trägergas, insbesondere mit Kaltluft, vorgesehen sein, um eine Abkühlung des erhitzten Trägergases auf eine vorgegebene Entladungs-Solltemperatur des Trägergases zu erreichen. Dies lässt eine einfache und genaue Regelung der Entladungs-Solltemperatur des Trägergases zu.

Zur Sicherstellung einer bestimmten (hohen) Entladungs-Solltemperatur für die Wärmenutzung in einem Prozess zur Strom- und/oder Wasserstofferzeugung kann auch vorgesehen sein, dass in wenigstens einem Wärmespeichermodul erhitztes Trägergas direkt mit heißem Trägergas aus dem Gaserhitzer vermischt wird. Das Trägergas aus dem Gaserhitzer liegt vorzugsweise bei der maximalen Beladungs-Solltemperatur vor.

Darüberhinaus kann die an das Trägergas in einem Gaserhitzer übertragende Wärme auch direkt, ohne Zwischenspeicherung der Wärme in einem Wärmespeichermodul, in einem Prozess zur Strom- und/oder Wasserstofferzeugung genutzt werden. Beispielsweise ist es möglich, dass ein Teil des im Gaserhitzer erzeugten heißen Trägergases an den Wärmespeichermodulen vorbei wenigstens einem Dampferzeuger des Dampfkraftprozesses zugeführt wird, um den Dampferzeuger während eines Beladungszyklus der Wärmespeichermodule warmzuhalten.

Bei einer bevorzugten Ausgestaltung des erfindungsgemäßen Verfahrens wird während eines Entladungszyklus wenigstens ein Wärmespeichermodul vollständig entladen und wenigstens ein Wärmespeichermodul lediglich teilweise entladen. Bei einer vollständigen Entladung beträgt die Austrittstemperatur des Trägergases aus dem Wärmespeichermodul am Ende des Entladungszyklus vorzugsweise weniger als 200 °C, vorzugsweise weniger als 100 °C, weiter vorzugsweise weniger als 50 °C, besonders bevorzugt weniger als 30 °C. Insbesondere ist in diesem Zusammenhang vorgesehen, wenigstens ein Wärmespeichermodul vollständig zu entladen, dessen nutzbarer Wärmeinhalt und/oder dessen Wärmespeichertemperatur zu gering ist, um das Trägergas allein auf eine vorgegebene Entladungs-Solltemperaturzu erwärmen, was natürlich von der Größe des Trägergasvolumenstroms abhängt. Wärmespeichermodule mit höherem Wärmeinhalt, insbesondere höherer Wärmespeichertemperatur, werden dagegen bei einem Entladungszyklus vorzugsweise nicht vollständig entladen. Dies gilt insbesondere für das erste Wärmespeichermodul oder mehrere Wärmespeichermodule einer Wärmespeicherreihe, die während eines Beladungszyklus zuerst von heißem Trägergas durchströmt und auf eine Speichertemperatur oberhalb von der Beladungs-Solltemperatur erwärmt werden. Zweckmäßiger Weise wird bei einem Entladungszyklus zuerst das Wärmespeichermodul mit dem geringsten Wärmeinhalt, insbesondere mit der geringsten Wärmespeichertemperatur, entladen und nachfolgend Wärmespeichermodule mit jeweils steigendem nutzbaren Wärmeinhalt und/oder mit jeweils steigender Wärmespeichertemperatur,

Bei sehr hohem Bedarf an elektrischer Energie ist es natürlich auch möglich, alle Wärmespeichermodule vollständig zu entladen. In Abhängigkeit von dem Wärmeinhalt eines Wärmespeichermoduls und/oder von der Wärmespeichertemperatur kann zur Einhaltung einer bestimmten Entladungs-Solltemperatur des bei einem Entladungszyklus erzeugten heißen Trägergases auch eine Temperaturregelung durch Zufuhr von kaltem Trägergas erforderlich sein. Dadurch lässt sich die geforderte Entladungs-Solltemperatur sicher einhalten.

Das bei einem Entladungszyklus erzeugte heiße Trägergas kann erfindungsgemäß zur Dampferzeugung in einem Dampfkraftprozess genutzt werden, wobei sich der elektrische Wirkungsgrad des Speicherkraftwerkes dadurch steigern lässt, dass das erhitzte Trägergas zunächst in einem Expander bzw. einer Gasentspannungsturbine des Speicherkraftwerkes entspannt und anschließend einem Dampferzeuger zugeführt wird. Der Absolutdruck des Trägergases vor dem Eintritt in die Gasentspannungsturbine kann bis 20 bar betragen. Zu diesem Zweck ist eine entsprechende Verdichtung des kalten Trägergases vorgesehen. Erfolgt die Stromerzeugung lediglich im Dampfkraftprozess, reicht ein Absolutdruck des Trägergases zwischen 2 und 5 bar, vorzugsweise zwischen 3 und 4 bar, aus, mit dem das erhitzte Trägergas einem Dampferzeuger zugeführt werden kann. Auch hier kann ein vorgeschalteter Expander bzw. eine Gasentspannungsturbine vorgesehen sein, um den elektrischen Wirkungsgrad des Speicherkraftwerkes zu steigern. Der Expander kann in Strömungsrichtung des Trägergases den Wärmespeichermodulen nachgeschaltet und einem Dampferzeuger vorgeschaltet sein.

Für eine Nutzung des Wärmespeicherkraftwerkes zur Grundlastdeckung kann das Trägergas in wenigstens einem Gaserhitzer erhitzt und nachfolgend direkt, das heißt ohne Beladung und Entladung der Wärmespeichermodule, zur Dampferzeugung im Dampfprozess genutzt werden. Hier kann insbesondere vorgesehen sein, das Trägergas in dem Gaserhitzer durch Verbrennung eines fossilen Energieträgers, wie Erdgas, zu erwärmen. Alternativ ist natürlich auch die Nutzung von nichtfossilen Energieträgern, wie beispielsweise Biogas, möglich. Weiter insbesondere kann eine indirekte Erwärmung des Trägergases vorgesehen sein, um das Trägergas nicht mit Verbrennungsgasen zu verunreinigen.

Zur Verringerung von umweltschädlichen Emissionen kann eine Kreislaufführung des Trägergases vorgesehen sein. Hierbei wird das Trägergas nach der Wärmeübertragung an das Arbeitsfluid nicht an die Umgebung abgeführt, sondern für eine erneute Beladung der Wärmespeichermodule genutzt. Es kann dann ein im Wesentlichen geschlossenes Trägergassystem vorliegen. Wird das Trägergas nach einer Wärmeübertragung an das Arbeitsfluid an die Umgebung abgeführt, liegt dagegen ein offenes Trägergassystem vor, das die Zufuhr frischen Trägergases für einen nachfolgenden Beladungszyklus erfordert.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

In der Zeichnung zeigen:
- Fig. 1: ein schematisches Verfahrensfließbild eines erfindungsgemäßen Verfahrens zum Ausgleich von Lastspitzen bei der Erzeugung von elektrischer Energie und/oder zu insbesondere dezentralen Erzeugung von elektrischer Energie in einem erfindungsgemäßen Speicherkraftwerk mit einer Mehrzahl von Wärmespeichermodulen bei der Beladung der Wärmespeichermodule, wobei ein offenes Trägergassystem vorgesehen ist,
- Fig. 2: ein schematisches Verfahrensfließbild des erfindungsgemäßen Verfahrens aus Fig. 1 bei der Entladung der Wärmespeichermodule,
- Fig. 3: ein schematisches Verfahrensfließbild einer alternativen Ausführungsform des erfindungsgemäßen Verfahrens bei der Beladung der Wärmespeichermodule, wobei ein geschlossenes Trägergassystem vorgesehen ist,
- Fig. 4: ein schematisches Verfahrensfließbild des erfindungsgemäßen Verfahrens aus Fig. 3 bei der Entladung der Wärmespeichermodule und
- Fig. 5 bis 8: schematische Darstellungen der möglichen Verschaltung von vier Wärmespeichermodulen bei der Beladung und Entladung,

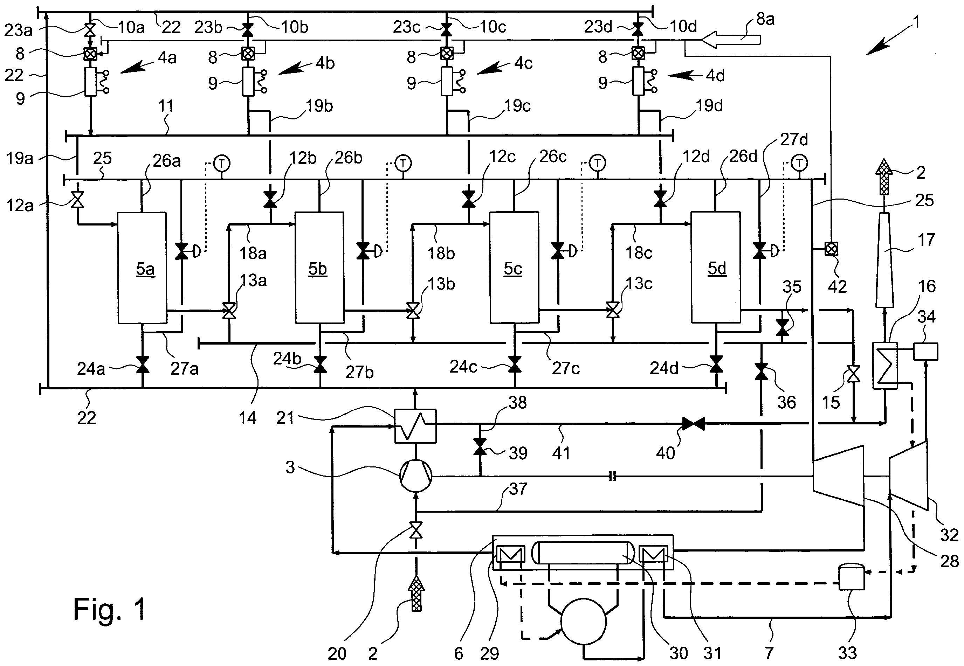

Die Figuren 1 bis 4 zeigen ein thermoelektrisches Speicherkraftwerk 1 zur Nutzung der Wärme von erhitztem Trägergas 2 für die Stromerzeugung, mit einem Verdichter 3 zur Verdichtung des Trägergases 2, mit einer Mehrzahl von Gaserhitzern 4a-d zur Erhitzung des Trägergases 2, mit einer Mehrzahl von Wärmespeichermodulen 5a-d zur Speicherung der Wärme von erhitztem Trägergas 2 und mit einem Dampferzeuger 6 zur Übertragung der Wärme von erhitztem Trägergas 2 an ein Arbeitsfluid 7 eines Dampfkraftprozesses. Bei dem Trägergas 2 handelt es sich vorzugsweise um Luft oder ein anderes geeignetes Gas. Bei dem Arbeitsfluid 7 handelt es sich vorzugsweise um Wasser.

Jeder Gaserhitzer 4a-d weist vorliegend eine Brennkammer 8 für den Einsatz insbesondere gasförmiger Energieträger 8a, wie Biogas oder Erdgas, und einen elektrischen Erhitzer 9 auf, der Heizleiter, beispielsweise aus Siliziumcarbid oder einem geeigneten Metall, aufweist und an eine Stromquelle anschließbar ist. Bei eingeschalteter Stromquelle erhitzen sich die Heizleiter und geben ihre Wärme an das Trägergas 2 ab. Das Trägergas 2 kann bei geeigneter Auslegung der Gaserhitzer 4a-d auf eine Beladungs-Solltemperatur von beispielsweise maximal 1200 °C erwärmt werden. Die Beladungs-Solltemperatur wird einer nicht dargestellten Steuer- und/oder Regelungseinrichtung als Sollwert vorgegeben.

Zum Ausgleich von Lastspitzen bei der Erzeugung von elektrischer Energie wird das Trägergas 2 zunächst in wenigstens einem Gaserhitzer 4 auf die Beladungs-Solltemperatur erwärmt. Die Mengenregelung des Systems ist so ausgeführt, dass je nach Anfall von elektrischer Energie die vorgegebene Beladungs-Solltemperatur für das Trägergas 2 am Austritt aus einem Gaserhitzer 4a-d eingehalten wird. Zur Erhitzung des Trägergases 2 können auch mehrere Gaserhitzer 4a-d gleichzeitig betrieben werden, wobei jeweils ein Teilstrom des Trägergases 2 einem Gaserhitzer 4a-d über eine Gasleitung 10a-d zugeführt und dort erwärmt wird. Die Teilströme können nach der Erhitzung über eine Sammelleitung 11 zusammengeführt und einem ersten Wärmespeichermodul 5a zugeführt werden, um das Wärmespeichermodul 5a durch Wärmeabgabe von dem erhitzten Trägergas 2 an ein Wärmespeichermaterial des Wärmespeichermoduls 5a thermisch zu beladen. Für die Beladung des ersten Wärmespeichermoduls 5a ist ein Zuführventil 12a geöffnet, während weitere Zuführventile 12 b-d, die die weiteren Wärmespeichermodule 5b-d mit den zugeordneten Gaserhitzern 4b-d verbinden, geschlossen sind.

Bei der gezeigten Ausführungsform sind die Wärmespeichermodule 5a-d in Reihe geschaltet und bilden eine Wärmespeicherreihe, wobei das auf die Beladungs-Solltemperatur in dem Gaserhitzer 4a erhitzte Trägergas 2 während eines Beladungszyklus nachfolgend die Wärmespeichermodule 5b-d der Wärmespeicherreihe durchströmt und die Wärmespeichermodule 5a-d erwärmt werden. Das Trägergas 2 verlässt zu Beginn des Beladungszyklus das Wärmespeichermodul 5a über ein Dreiwegeventil 13a zunächst kalt. Mit steigender Wärmeaufnahme der Speichermasse steigt die Temperatur des aus dem Wärmespeichermodul 5a ausströmenden Trägergases 2.

Das Dreiwegeventil 13a hat zwei Schaltmöglichkeiten. Das Trägergas 2 kann entweder über die Sammelleitung 14, das Auslassventil 15 und einen Wärmeübertrager 16 als Abluft einem Kamin 17 zugeführt werden. Für eine Beladung der nachfolgenden Wärmespeichermodule 5b-d wird das Trägergas 2 jedoch bei ausreichendem Wärmeinhalt bzw. bei ausreichender Wärmespeichertemperatur über die Dreiwegeventile 13a-c den nachfolgenden Wärmespeichermodulen 5b-d zugeführt. Dies erfolgt über die Zuführleitungen 18a-c. Dadurch kann die in dem Trägergas 2 enthaltene Wärmeenergie weitgehend vollständig in den Wärmespeichermodulen 5a-d gespeichert werden.

Das Wärmespeichermodul 5b ist vorzugsweise derart ausgelegt, dass kaltes Trägergas 2 auch dann noch aus dem Wärmespeichermodul 5b austritt, wenn das Wärmespeichermodul 5a vollständig beladen ist. Eine vollständige Beladung liegt vor, wenn die Austrittstemperatur des Trägergases 2 aus dem Wärmespeichermodul 5a der Eintritts- bzw. Beladungs-Solltemperatur von beispielsweise 1200 °C entspricht. Das das Wärmespeichermodul 5a verlassende Trägergas 2 wird über das Dreiwegeventil 13b und die Zuführleitung 18b dem dritten Wärmespeichermodul 5c zugeführt. Alternativ kann das Trägergas 2 über die Sammelleitung 14 an die Umgebung abgeführt werden. Es besteht die Möglichkeit, das Wärmespeichermodul 5d ebenfalls zu beladen oder weitere nicht gezeigte Wärmespeichermodule zuzuschalten.

Die Gaserhitzer 4a-d können jeweils die einzelnen Wärmespeichermodule 5a-d mit erhitztem Trägergas 2 versorgen, was über die Beladungsleitungen 19a-d und ggf. weitere, nicht gezeigte Ventile, möglich ist. Dadurch kann ein Wärmespeichermodul 5b-d auch dann vollständig beladen werden, wenn der Wärmeinhalt des aus dem vorherigen Wärmespeichermodul 5a-c austretenden Trägergases 2 für eine vollständige Beladung des nachfolgenden Wärmespeichermoduls 5b-d nicht ausreicht. Vorzugsweise ist jedoch vorgesehen, dass die in den Gaserhitzern 4a-d erzeugten heißen Trägergasströme über die Sammelleitung 11 zusammengeführt werden und dass die Wärmespeichermodule 5a-d ausgehend von dem ersten Wärmespeichermodul 5a für eine Beladung von Heißgas nachfolgend durchströmt werden.

Nicht dargestellt ist, dass während eines Beladungszyklus der Wärmespeichermodule 5a-d ein Teilstrom des heißen Trägergases 2 aus der Sammelleitung 11 mit einem Teilstrom kalten Trägergases 2, dass über den Verdichter 3 zugeführt wird, vermischt und zur Warmhaltung dem Dampferzeuger 6 zugeführt werden kann. Die Temperaturregelung kann über die Größe der Volumenströme erfolgen.

Bei den Wärmespeichermodulen 5a-d kann es sich um thermisch isolierte Gefäße handeln, in denen eine wärmespeichernde Masse, beispielsweise eine Kugelschüttung aus keramischem Material, angeordnet ist. Geeignete Wärmespeichermaterialien sind dem Fachmann bekannt. Die Wärmespeichermasse wird durch das heiße Trägergas 2 aufgeheizt, während sich das Trägergas 2 abkühlt. Bei geeigneter Auslegung der Wärmespeichermodule 5a-d kann der Wirkungsgrad bei der Umwandlung elektrischer Leistung in Wärme und Übertragung der Wärme auf die Speichermasse mehr als 90%, vorzugsweise mehr als 95%, betragen.

Bei der Beladung der Wärmespeichermodule 5a-d erfolgt die Zufuhr von Trägergas 2 über ein geöffnetes Zuleitungsventil 20 zum Verdichter 3, mit dem Trägergas 2 über einen Vorwärmer 21 und eine Sammelleitung 22 sowie weitere Zuleitungsventile 23a-d den Gaserhitzern 4a-d zugeführt werden kann. Gemäß Fig. 1 wird das gesamte Trägergas 2 bei geöffnetem Zuleitungsventil 23a lediglich dem ersten Gaserhitzer 4a zugeführt. Die Zuleitungsventile 23b-d sind geschlossen. Grundsätzlich kann jedoch, wie oben beschrieben, eine Erwärmung des Trägergases 2 auch in mehreren oder allen Gaserhitzern 4a-d vorgesehen sein.

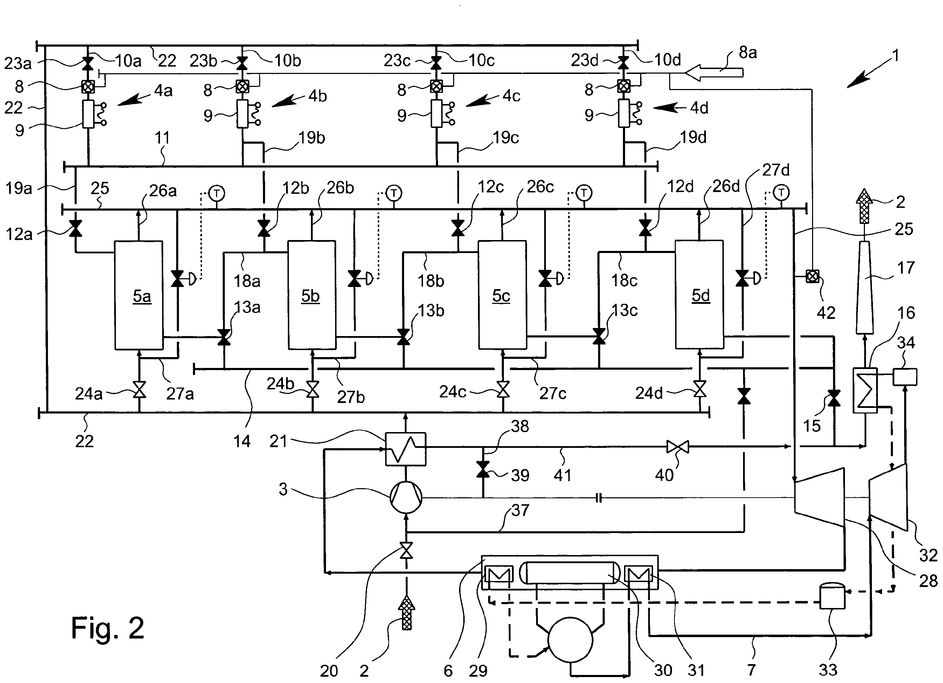

Fig. 2 zeigt schematisch die Entladung der Wärmespeichermodule 5a-d des in Fig. 1 gezeigten Speicherkraftwerks 1. Für den Entladebetrieb sind die Zuleitungsventile 23a-d geschlossen. Stattdessen sind weitere Zuleitungsventile 24a-d geöffnet, so dass kaltes Trägergas 2 für eine parallele Entladung der Wärmespeichermodule 5a-d über den Verdichter 3 und die Sammelleitung 22 in die Wärmespeichermodule 5a-d gedrückt wird. Hierbei wird das Trägergas 2 in den Wärmespeichermodulen 5a-d erwärmt. Wahlweise kann das Trägergas 2 über alle Wärmespeichermodule 5a-d parallel geführt werden oder es ist möglich, lediglich ein oder mehrere Wärmespeichermodule 5a-d zu entladen. Das Trägergas 2 kann nach dem Austritt aus den Wärmespeichermodulen 5a-d in einer weiteren Sammelleitung 25 zusammengeführt werden. Die Sammelleitung 25 ist hierzu über Austrittsleitungen 26a-d mit den Wärmespeichermodulen 5a-d verbunden. Aus den Wärmespeichermodulen 5a-d tritt das Trägergas 2 höchstens mit der Beladungs-Solltemperatur von 1200 °C aus.

Darüber hinaus kann vorgewärmtes Trägergas 2 über Bypassleitungen 27a-d zumindest teilweise an den Wärmespeichermodulen 5a-d vorbei in die Sammelleitung 25 eingespeist werden. Dadurch ist es möglich, heißes Trägergas aus den Wärmespeichermodulen 5a-d und kaltes Trägergas 2 über eine entsprechende Mengenregelung so zu mischen, dass sich eine gewünschte Entladungs-Solltemperatur des heißen Trägergases 2 einstellt. Diese Entladungs-Solltemperatur kann beispielsweise zwischen 600 °C und 800 °C betragen. Diese Temperatur wird vorzugsweise über den gesamten Entladebetrieb konstant gehalten. Ist die Austrittstemperatur beim Austritt des Trägergases 2 aus einem Wärmespeichermodul 5a-d größer als die gewünschte Entladungs-Solltemperatur, kann eine Temperaturregelung über die jeweiligen Bypassleitungen 27a-d erfolgen.

Bei Anordnung der Wärmespeichermodule 5a-d in einer Wärmespeicherreihe kann vorgesehen sein, die Wärmespeichermodule 5a-d in Abhängigkeit von dem nutzbaren Wärmeinhalt und/oder der Wärmespeichertemperatur des jeweiligen Wärmespeichermoduls 5a-d zu entleeren, wobei beginnend mit einem Wärmespeichermodul 5d, das den geringsten Wärmeinhalt und/oder die geringste Wärmespeichertemperatur aufweisen kann, nachfolgend die Wärmespeichermodule 5c, 5b, 5a, d.h. umgekehrt zur Richtung der Beladung, entladen werden. Die Entladung beginnt somit vorzugsweise mit dem Wärmespeichermodul, das den geringsten nutzbaren Wärmeinhalt und/oder die geringste Wärmespeichertemperatur aufweist. Nachfolgend wird das jeweilige Wärmespeichermodul entladen, das den im Vergleich zu den verbleibenden Wärmespeichermodulen wiederum geringsten nutzbaren Wärmeinhalt bzw. die geringste Wärmespeichertemperatur aufweist. Es müssen jedoch nicht alle Wärmespeichermodule 5a-d vollständig entladen werden. Durch das beschriebene Verfahren lassen sich ein hoher Systemwirkungsgrad erreichen und die erzeugte elektrische Leistung an den tatsächlichen Bedarf anpassen.

Unterschreitet beispielsweise die Austrittstemperatur des Trägergases 2 aus dem letzten Wärmespeichermodul 5d der Wärmespeicherreihe eine vorgegebene Entladungs-Solltemperatur, wird ein Teilstrom des Trägergases 2 über den in der Wärmespeicherreihe vorhergehenden Wärmespeicher 5c mit einem höheren Wärmeinhalt und/oder einer höheren Wärmespeichertemperatur geleitet. Die Trägergasströme werden zusammengeführt, so dass sich die Entladungs-Solltemperatur einstellt. Das Wärmespeichermodul 5d dient dann als Bypass, der solange betrieben wird, bis das Wärmespeichermodul 5d vollständig entleert ist. Die gewünschte Entladungs-Solltemperatur des Trägergases 2 wird dabei durch Entladung wenigstens eines vorgelagerten Wärmespeichermoduls 5a bis 5c der Wärmespeicherreihe erreicht, wobei ggf. wiederum eine Temperaturregelung durch Zufuhr kalten Trägergases 2 über wenigstens eine Bypassleitung 27a-d erfolgen kann.

Der Verdichter 3 verdichtet das Trägergas 2 vorzugsweise auf einen Systemdruck von bis zu 20 bar. Das bei einem Entladungszyklus erzeugte heiße Trägergas 2 wird über die Sammelleitung 25 einem Expander 28 zugeführt und in dem Expander 28 entspannt. Dabei kühlt sich das Trägergas 2 je nach Druckniveau ab. Ist die Verwendung eines Expanders nicht vorgesehen, kann der Systemdruck deutlich geringer sein und beispielsweise lediglich zwischen 3 und 4 bar (absolut) betragen. Das aus dem Expander 28 austretende Trägergas 2 dient der Erzeugung und Überhitzung von Hochdruck-Wasserdampf im Dampferzeuger 6. Der Dampferzeuger 6 kann einen Vorwärmer 29, eine Dampftrommel 30 und einen Überhitzer 31 aufweisen. Im Übrigen entspricht der Dampferzeuger 6 einer üblichen Bauart. Der erzeugte Dampf wird einer Dampfturbine 32 zugeführt. Der Expander 28 und die Dampfturbine 32 sind mit einem nicht dargestellten Generator verbunden. Im Übrigen kann ein Entgaser 33 und ein Kondensator 34 vorgesehen sein.

Der elektrische Wirkungsgrad des Speicherkraftwerkes 1 kann bis zu 60% erreichen. Darüber hinaus ist es möglich, Fernwärme auszukoppeln. Der thermische Wirkungsgrad bei der Fernwärmenutzung kann bis zu 98% erreichen. Weiterhin kann aus dem Speicherkraftwerk 1 Prozessdampf ausgekoppelt werden.

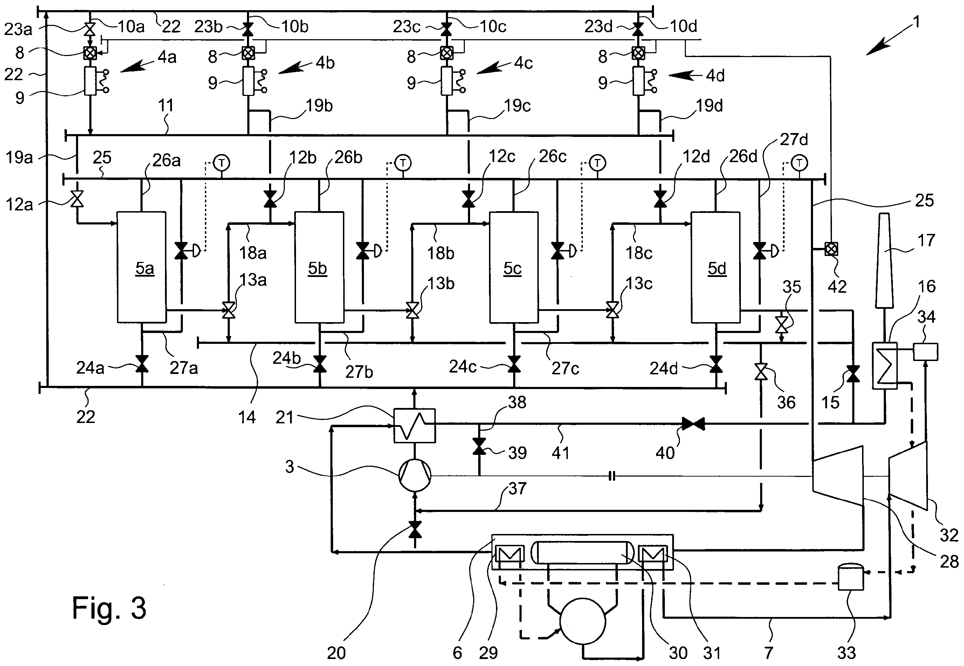

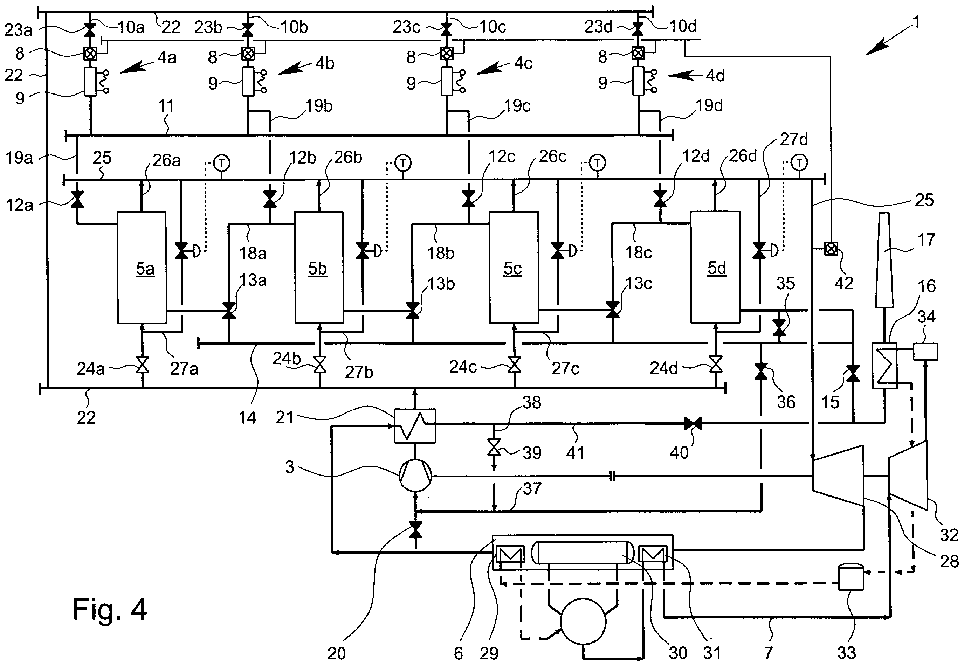

Während die Figuren 1 und 2 einen Betrieb des Speicherkraftwerkes 1 bei offenem Trägergassystem zeigen, wobei das Trägergas 2 als Abluft über den Kamin 17 an die Umgebung abgeführt wird, besteht die Möglichkeit einer Kreislaufführung des Trägergases 2. Dies ist schematisch in den Figuren 3 und 4 gezeigt, wobei Fig. 3 den Zustand während eines Beladungszyklus und Fig. 4 den Zustand während eines Entladungszyklus zeigt.

Bei geschlossenem Trägergassystem ist eine Brenngaszufuhr und die Verbrennung des Brenngases in den Brennkammern 8 der Gaserhitzer 4a-d vorzugsweise nicht vorgesehen, bei indirekter Wärmeübertragung aber möglich. Stattdessen erfolgt die Erhitzung des Trägergases 2 vorzugsweise ausschließlich mittels Heizleitern durch Umwandlung von elektrischer Energie in thermische Energie. Wird das Trägergas 2 im Kreislauf geführt, ist das Auslassventil 15 bei der Beladung der Wärmetauschermodule 5a-d geschlossen. Stattdessen sind die Kreislaufventile 35, 36 geöffnet, so dass aus einem Wärmespeichermodul 5a bis 5d austretendes Trägergas über die Sammelleitung 14 und eine Kreislaufleitung 37 dem Verdichter 3 zugeführt wird. Das Zuleitungsventil 20 ist geschlossen, so dass keine Zufuhr von frischem Trägergas 2 in das Trägergassystem erfolgt In einem Entladungszyklus wird das Trägergas 2 nach dem Passieren des Vorwärmers 21 über eine Rückführleitung 38, ein geöffnetes Rückführventil 39 und die Kreislaufleitung 37 dem Verdichter zugeführt und steht dann für eine erneute Beladung der Wärmespeichermodule 5a-d zur Verfügung, Die Kreislaufventile 35, 36 und ein weiteres Auslassventil 40, dass das Abführen des Trägergases 2 bei der Entladung im offenen Trägergassystem über eine Auslassleitung 41 und den Kamin 17 zulässt (Fig. 2), sind geschlossen.

Wie sich im Übrigen aus den Figuren 1 und 2 ergibt, kann eine weitere Brennkammer 42 als Teil eines weiteren Gaserhitzers vorgesehen sein, mit der es möglich ist, das Trägergas 2 vor dem Eintritt in den Expander 28 durch Verbrennung von Brenngas 8a auf eine bestimmte Solltemperatur von beispielsweise 600 °C bis 800 °C zu erhitzen. Der Gaserhitzer kann zur direkten oder indirekten Wärmeübertragung ausgebildet sein. Dies ermöglicht die Nutzung des Speicherkraftwerks 1 zur Grundlastdeckung, wobei hierfür eine Be- und Entladung der Wärmespeichermodule 5a-d nicht erforderlich ist. Die Brennkammer 42 kann darüber hinaus dazu dienen, bei der Beladung der Wärmespeichermodule 5a-d Heißgas zur Warmhaltung von Maschinen bereitzustellen. Die Erhitzung des Trägergases in der Brennkammer 42 kann darüber hinaus zur Verringerung der Stromgestehungskosten beitragen.

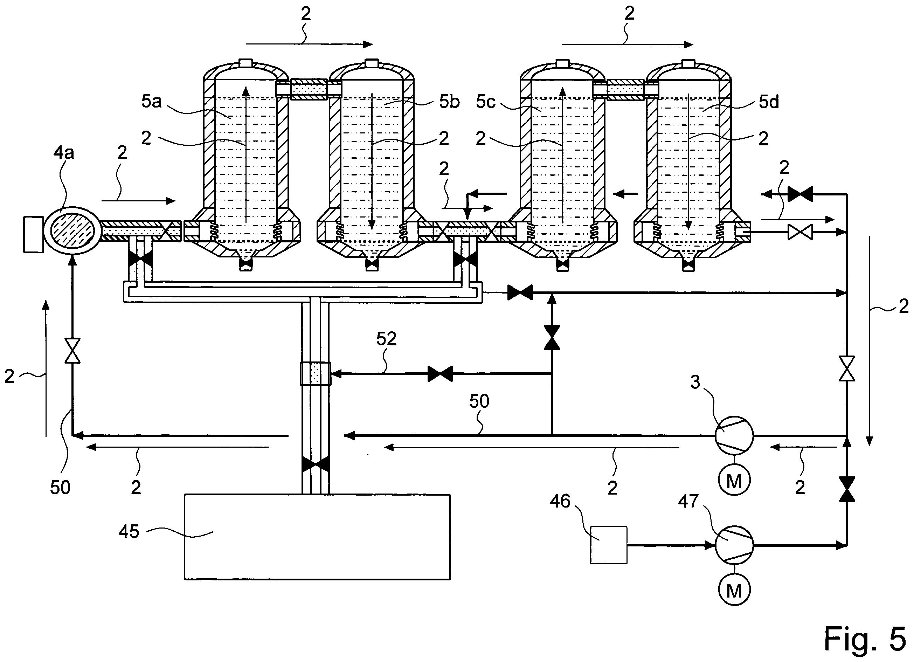

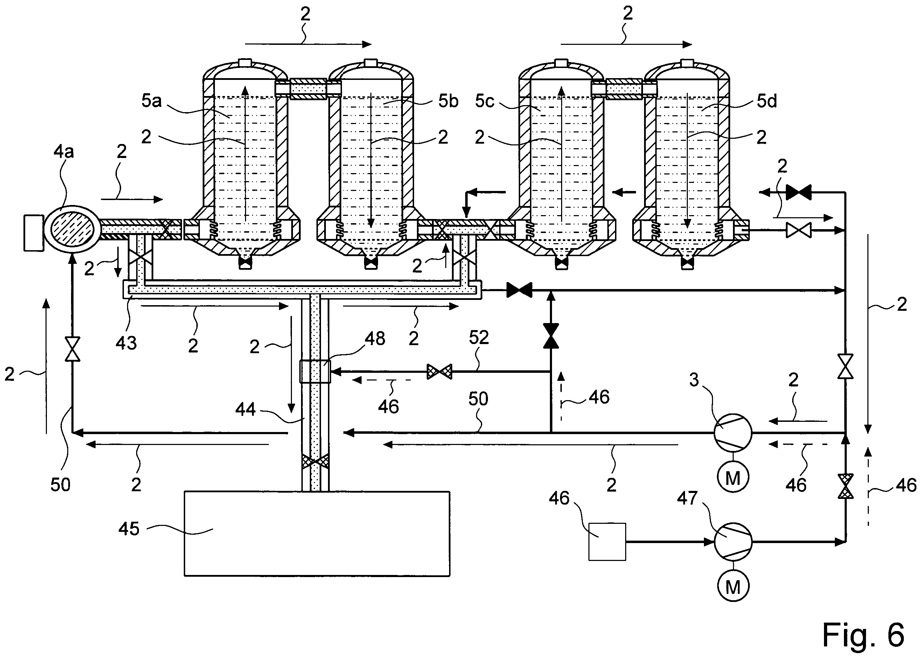

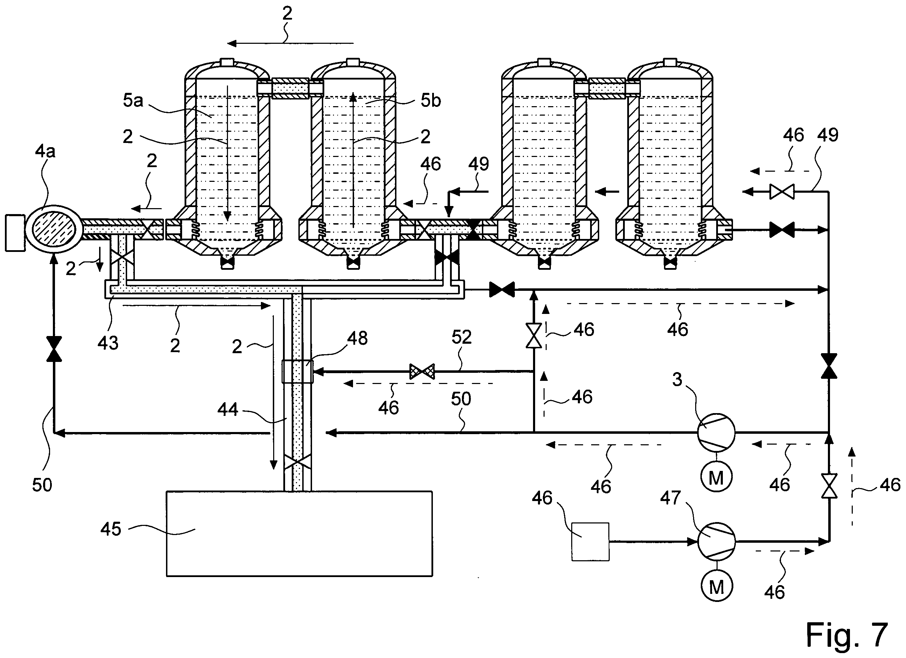

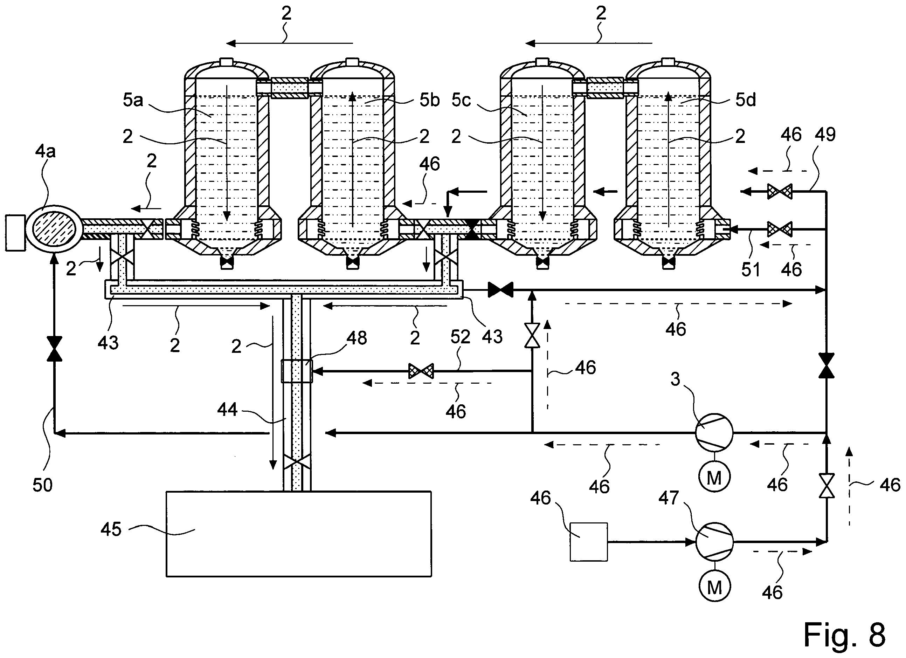

In den Fig. 5 bis 8 ist ein Verschaltungsbeispiel für die Beladung und Entladung von vier Wärmespeichermodulen 5a-d schematisch gezeigt. Fig. 5 und Fig. 6 zeigen die Verschaltung bei Beladung der Wärmespeichermodule 5a-d, während Fig. 7 und Fig. 8 die Verschaltung bei Entladung der Wärmespeichermodule 5a-d zeigen.

Für die Beladung der Wärmespeichermodule 5a-d wird in einem Gaserhitzer 4a, der als Lufterhitzer ausgebildet ist, Trägergas 2 erwärmt und gemäß Fig. 5 anschließend den Wärmespeichermodulen 5a-d zugeführt. Bei dem Trägergas 2 kann es sich um Luft handeln. Hierbei durchströmt das heiße Trägergas 2 aus dem Gaserhitzer 4a die in Reihe geschalteten Wärmespeichermodule 5a-d nachfolgend. Die Wärmespeichermodule 5a-d können paarweise angesteuert bzw. mit Trägergas 2 durchströmt werden. Das gilt für die Beladung und die Entladung gleichermaßen. Bei der gezeigten Ausfürhungsform sind die in den Fig. 5 bis 8 links gezeigeten ersten beiden Wärmespeichermodule 5a und 5b und die rechts gezeigten weiteren Wärmespeichermodule 5c und 5d jeweils einem Wärmespeicherpaar bzw. einer Wärmespeichereinheit zugeordnet, wobei die Wärmespeicherpaare aufgrund der Leitungsführung separat und unabhängig voneiander angesteuert bzw. mit Trägergas 2 durchströmt werden können. Es versteht sich, dass auch mehr als zwei Wärmespeichermodule 5a-d einem separat ansteuerbaren Wärmespeicherpaar zugeordnet sein können, wenn die Speicheranordnung mehr als vier Wärmespeichermodule 5a-d umfasst.

Gemäß den Fig. 5 und 6 werden zwei Wärmespeicherpaare mit jeweils zwei Wärmespeichermodulen 5a, 5b bzw. 5c, 5d in Reihe geschaltet und nacheinander von dem heißen Trägergas 2 aus dem Gaserhitzer 4a durchströmt. Das Trägergas 2 wird hierbei gemäß Fig. 5 über eine Kreislaufleitung 50 im Kreislauf geführt und gelangt nach dem Austritt aus dem in Fig. 5 rechts dargestellten vierten Wärmespeichermodul 5d über einen Verdichter 3 zurück zu dem Gaserhitzer 4a. Die Gasführung wird über eine geeignete Steuerung einer Mehrzahl von Ventilen erreicht.

Gemäß Fig. 6 kann eine Beladung der vier Wärmespeichermodule 5a-d auch derart erfolgen, dass heißes Trägergas 2 aus dem Gaserhitzer 4a die beiden Wärmespeicherpaare mit den Wärmespeichermodulen 5a, 5b einerseits und 5c, 5d andererseits parallel durchströmt. Das Trägergas 2 tritt mit einer bestimmten Beladungs-Solltemperatur aus dem Gaserhitzer 4a aus und wird mit dieser Temperatur dem jeweils ersten Wärmespeichermodul 5a bzw. 5c des jeweiligen Wärmespeicherpaars zugeführt. Dadurch ist eine vollständige Beladung möglich.

Gemäß Fig. 6 wird das heiße Trägergas 2 aus dem Gaserhitzer 4a über eine Bypassleitung 43 an den beiden Wärmespeichermodulen 5a, 5b des ersten Wärmespeicherpaars vorbeigeleitet und gelangt damit zu dem Wärmespeichermodul 5c des in Fig. 6 rechts dargestellten Wärmespeicherpaars. Darüberhinaus ist es möglich, heißes Trägergas 2 aus dem Gaserhitzer 4a über eine Verbraucherleitung 44 direkt einem Verbraucher 45 zuzuführen, wobei der Begriff "Verbraucher" im Sinne der Erfindung jegliche Nutzungsmöglichkeit der Wärme des heißen Trägergases 2 in einem Kraftwerksprozess und/oder Vergasungsprozess umfasst.

Im Übrigen lässt es die Verschaltung gemäß Fig. 6 zu, Frischluft 46 über einen weiteren Verdichter 47 und eine Regelleitung 52 einer Mischkammer 48 zu zuführen, um die Temperatur des heißen Trägergases 2 vor der Weiterleitung an den Verbraucher 45 entsprechend zu regulieren. Die Frischluft 46 liegt dabei auf einem deutlich geringeren Temperaturniveau vor als das aus dem Gaserhitzer 4a austretende heiße Trägergas 2.

Bei der Entladung der Wärmespeichermodule 5a-d kann gemäß Fig. 7 vorgesehen sein, Frischluft 46, die das Trägergas 2 bildet, über die Verdichter 3, 47 und eine weitere Bypassleitung 49 an den beiden in Fig. 7 rechts dargestellten Wärmespeichermodulen 5c, 5d des rechten Wärmespeicherpaars vorbeizuführen und dem in Fig. 7 rechts dargestellten Wärmespeichermodul 5b des linken Wärmespeicherpaars zuzuführen. Die Frischluft 46 bzw. das Trägergas 2 durchströmt dann die beiden Wärmespeichermodule 5a, 5b des in Fig. 7 links dargestellten Wärmespeicherpaars und gelangt über die Bypassleitung 43 und die Verbraucherleitung 44 zum Verbraucher 45. Auch hier kann bedarfsweise eine Zufuhr von Frischluft 46 über die Regelleitung 52 und die Mischkammer 48 in das Trägergas 2 vorgesehen sein, um eine bestimmte Nutztemperatur des Trägergases 2 für den Kraftwerksprozess und/oder Vergasungsprozess einzustellen bzw. einzuregeln.

Im Übrigen ist es gemäß Fig. 7 bei einer zu geringen Entladungs-Solltemperatur des Trägergases 2 beim Austritt aus dem in Fig. 7 ganz links dargestellten Wärmespeichermodul 5a möglich, heißes Trägergas 2 aus dem Gaserhitzer 4a mit erhitztem Trägergas 2 aus dem Wärmespeichermodul 5a zu vermischen, um eine von dem Verbraucher 46 geforderte Nutzungstemperatur des Trägergases 2 zu erreichen.

Gemäß Fig. 8 kann Frischluft 46 über die Verdichter 47, 3 und eine Entladungsleitung 51 dem letzten Wärmespeichermodul 5d des in Fig. 8 rechts gezeigten Wärmespeicherpaars zugeführt werden. Das in den Wärmespeichermodulen 5c, 5d erhitzte Trägergas 2 gelangt über die Bypassleitung 43 zur Mischkammer 48. Zudem wird Frischluft 46 über die Bypassleitung 49 den Wärmespeichermodulen 5a, 5b des anderen Wärmespeicherpaars zugeführt und dort erhitzt. Das in den Wärmespeichermodulen 5a, 5b erhitzte Trägergas 2 gelangt über die Bypassleitung 43 ebenfalls zur Mischkammer 48. Die beiden Wärmespeicherpaare werden damit parallel entladen, während die Wärmespeichermodule 5a, 5b bzw. 5c, 5d eines jeden Wärmespeicherpaars in Reihe entlanden werden. Auch hier kann bedarfsweise die Temperatur des erhitzten Trägergases 2 durch Zufuhr von Frischluft 46 über die Regelleitung 52 zur Mischkammer 48 reguliert werden. Anschließend gelangt das Trägergas 2 zum Verbraucher 45. Grundsätzlich ist bedarfsweise auch eine direkte Zufuhr von heißem Trägergas 2 aus dem Gaserhitzer 4a in die Mischkammer 48 möglich, um die Temperatur des in den Wärmespeichermodulen 5a-d erhitzten Trägergases 2 zu erhöhen.

Bei der Entladung der Wärmespeichermodule 5a-d ist es auch möglich, dass die Wärmespeichermodule 5a-d beginnend vom letzten in Fig. 8 ganz rechts dargestellten Wärmespeichermodul 5d und damit die Wärmespeicherpaare nachfolgend in Reihenschaltung durchströmt werden.

### Bezugszeichenliste:

- 1: Speicherkraftwerk
- 2: Trägergas
- 3: Verdichter
- 4a-d: Gaserhitzer
- 5a-d: Wärmespeichermodul
- 6: Dampferzeuger
- 7: Arbeitsfluid
- 8: Brennkammer
- 8a: Brenngas
- 9: elektrischer Hitzer
- 10a-d: Teilstrom
- 11: Sammelleitung
- 12a-d: Zuführventil
- 13a-c: Dreiwegeventil
- 14: Sammelleitung
- 15: Auslassventil
- 16: Wärmeübertrager
- 17: Kamin
- 18a-c: Zuführleitung
- 19a-d: Beladungsleitung
- 20: Zuleitungsventil
- 21: Vorwärmer
- 22: Sammelleitung
- 23a-d: Zuleitungsventil
- 24a-d: Zuleitungsventil
- 25: Sammelleitung
- 26a-d: Austrittsleitung

- 27a-d: Bypassleitung
- 28: Expander
- 29: Vorwärmer
- 30: Dampftrommel
- 31: Überhitzer
- 32: Dampfturbine
- 33: Entgaser
- 34: Kondensator
- 35: Kreislaufventil
- 36: Kreislaufventil
- 37: Kreislaufleitung
- 38: Rückführleitung
- 39: Rückführventil
- 40: Auslassventil
- 41: Auslassleitung
- 42: Brennkammer
- 43: Bypassleitung
- 44: Verbrauchsleitung
- 45: Verbraucher
- 46: Frischluft
- 47: Verdichter
- 48: Mischkammer
- 49: Bypassleitung
- 50: Kreislaufleitung
- 51: Entladungsleitung
- 52: Regelleitung

## Patentansprüche

1. Verfahren zum Ausgleich von Lastspitzen bei der Erzeugung von elektrischer Energie und/oder zur Erzeugung von elektrischer Energie durch Nutzung der Wärme von erhitztem Trägergas (2) für die Stromerzeugung und/oder zur Nutzung der Wärme von erhitztem Trägergas (2) für die Wasserstofferzeugung, mit den Schritten
- Erhitzung von Trägergas (2), insbesondere von Heißluft, in wenigstens einem Gaserhitzer (4a-d), wobei heißes Trägergas (2) mit einer bestimmten Beladungs-Solltemperatur aus dem Gaserhitzer (4a-d) austritt,
- thermische Beladung von wenigstens einem Wärmespeichermodul (5a-d) einer Mehrzahl von Wärmespeichermodulen (5a-d) eines Speicherkraftwerkes (1) durch Wärmeabgabe von dem heißen Trägergas (2) aus dem Gaserhitzer (4a-d) an ein Wärmespeichermaterial des Wärmespeichermoduls (5a-d),
- zeitversetzte thermische Entladung von wenigstens einem Wärmespeichermodul (5a-d), vorzugsweise einer Mehrzahl von Wärmespeichermodulen (5a-d), wobei wenigstens ein Wärmespeichermodul (5a-d) von kälterem Trägergas (2), insbesondere von Kaltluft, durchströmt und Wärme von dem Wärmespeichermaterial an das kältere Trägergas (2) zur Erhitzung des Trägergases (2) übertragen wird, wobei erhitztes Trägergas (2) mit einer bestimmten Entladungstemperatur aus dem Wärmespeichermodul (5a-d) austritt, und
- Nutzung der an das Trägergas (2) übertragenen Wärme in einem Prozess zur Stromerzeugung und/oder zur Wasserstofferzeugung, **dadurch gekennzeichnet, dass** bei einem Entladungszyklus wenigstens ein Wärmespeichermodul (5a-d) mit einer geringeren Wärmespeichertemperatur und/oder einem geringeren nutzbaren Wärmeinhalt vollständig entladen und wenigstens ein Wärmespeichermodul (5a-d) mit einer höheren Wärmespeichertemperatur und/oder einem höheren nutzbaren Wärmeinhalt lediglich teilweise entladen wird.

2. Verfahren nach Anspruch 1, **dadurch gekennzeichnet, dass** eine Wärmeübertragung von in wenigstens einem Wärmespeichermodul (5a-d) erhitztem Trägergas (2) an ein Arbeitsfluid (7) eines Kraftwerksprozesses zur Stromerzeugung, insbesondere eines Dampfkraftprozesses, vorgesehen wird.

3. Verfahren nach Anspruch 1 oder 2, **dadurch gekennzeichnet, dass** eine rein elektrische Erhitzung des Trägergases (2) in wenigstens einem elektrischen Lufterhitzer (9) durch Umwandlung von elektrischer Energie in thermische Energie vorgesehen wird.

4. Verfahren nach einem der vorhergehenden Ansprüche, **dadurch gekennzeichnet, dass** bei der Beladung mehrere Wärmespeichermodule (5a-d) in Reihe geschaltet sind und nachfolgend von erhitztem Trägergas (2) durchströmt werden, wobei, vorzugsweise, eine wenigstens paarweise Ansteuerung von mehreren Wärmespeichermodulen (5a-d) vorgesehen wird.

5. Verfahren zum Ausgleich von Lastspitzen bei der Erzeugung von elektrischer Energie und/oder zur Erzeugung von elektrischer Energie durch Nutzung der Wärme von erhitztem Trägergas (2) für die Stromerzeugung und/oder zur Nutzung der Wärme von erhitztem Trägergas (2) für die Wasserstofferzeugung, mit den Schritten
- Erhitzung von Trägergas (2), insbesondere von Heißluft, in wenigstens einem Gaserhitzer (4a-d), wobei heißes Trägergas (2) mit einer bestimmten Beladungs-Solltemperatur aus dem Gaserhitzer (4a-d) austritt,
- thermische Beladung von wenigstens einem Wärmespeichermodul (5a-d) einer Mehrzahl von Wärmespeichermodulen (5a-d) eines Speicherkraftwerkes (1) durch Wärmeabgabe von dem heißen Trägergas (2) aus dem Gaserhitzer (4a-d) an ein Wärmespeichermaterial des Wärmespeichermoduls (5a-d),
- zeitversetzte thermische Entladung von wenigstens einem Wärmespeichermodul (5a-d), vorzugsweise einer Mehrzahl von Wärmespeichermodulen (5a-d), wobei wenigstens ein Wärmespeichermodul (5a-d) von kälterem Trägergas (2), insbesondere von Kaltluft, durchströmt und Wärme von dem Wärmespeichermaterial an das kältere Trägergas (2) zur Erhitzung des Trägergases (2) übertragen wird und wobei erhitztes Trägergas (2) mit einer bestimmten Entladungstemperatur aus dem Wärmespeichermodul (5a-d) austritt, und Nutzung der an das Trägergas (2) übertragenen Wärme in einem Prozess zur Stromerzeugung und/oder zur Wasserstofferzeugung, **dadurch gekennzeichnet, dass** mehrere in Reihe geschaltete Wärmespeichermodule (5a-d) eine Wärmespeicherreihe bilden und bei der Beladung nachfolgend von erhitztem Trägergas (2) durchströmt werden, wobei die Beladung eines nachfolgenden Wärmespeichermoduls (5b-d) der Wärmespeicherreihe zumindest teilweise durch direkte Zufuhr von heißem Trägergas (2) aus einem Gaserhitzer (4a-d) erfolgt.

6. Verfahren nach Anspruch 5, **dadurch gekennzeichnet, dass** die Beladung eines nachfolgenden Wärmespeichermoduls (5b-d) der Wärmespeicherreihe zumindest teilweise durch direkte Zufuhr von heißem Trägergas (2) aus einem Gaserhitzer (4a-d) erfolgt, wenn die Austrittstemperatur des Trägergases aus einem vorhergehenden Wärmespeichermodul (5a-c) der Wärmespeicherreihe eine vorgegebene Mindesttemperatur für die Beladung des nachfolgenden Wärmespeichermoduls (5b-d) unterschreitet.

7. Verfahren nach einem der vorhergehenden Ansprüche, **dadurch gekennzeichnet, dass** mehrere Wärmespeichermodule (5a-d) parallel beladen werden, wobei jedem Wärmespeichermodul (5a-d) ein separater heißer Trägergasstrom zugeführt wird und wobei, vorzugsweise, eine wenigstens paarweise Ansteuerung von mehreren Wärmespeichermodulen (5a-d) vorgesehen wird.

8. Verfahren nach einem der vorhergehenden Ansprüche, **dadurch gekennzeichnet, dass** mehrere Wärmespeichermodule (5a-d) parallel entladen werden, wobei jedem Wärmespeichermodul (5a-d) ein separater kalter Trägergasstrom zugeführt wird und wobei, vorzugsweise, eine wenigstens paarweise Ansteuerung von mehreren Wärmespeichermodulen (5a-d) vorgesehen wird.

9. Verfahren nach einem der vorhergehenden Ansprüche, **dadurch gekennzeichnet, dass** bei der Entladung in wenigstens einem Wärmespeichermodul (5a-d) erhitztes Trägergas (2) mit kälterem Trägergas (2) und/oder mit Kaltluft zur Einstellung einer bestimmten Solltemperatur für die Wärmenutzung in einem Prozess zur Strom- und/oder Wasserstofferzeugung vermischt wird.

10. Verfahren zum Ausgleich von Lastspitzen bei der Erzeugung von elektrischer Energie und/oder zur Erzeugung von elektrischer Energie durch Nutzung der Wärme von erhitztem Trägergas (2) für die Stromerzeugung und/oder zur Nutzung der Wärme von erhitztem Trägergas (2) für die Wasserstofferzeugung, mit den Schritten
- Erhitzung von Trägergas (2), insbesondere von Heißluft, in wenigstens einem Gaserhitzer (4a-d), wobei heißes Trägergas (2) mit einer bestimmten Beladungs-Solltemperatur aus dem Gaserhitzer (4a-d) austritt,
- thermische Beladung von wenigstens einem Wärmespeichermodul (5a-d) einer Mehrzahl von Wärmespeichermodulen (5a-d) eines Speicherkraftwerkes (1) durch Wärmeabgabe von dem heißen Trägergas (2) aus dem Gaserhitzer (4a-d) an ein Wärmespeichermaterial des Wärmespeichermoduls (5a-d),
- zeitversetzte thermische Entladung von wenigstens einem Wärmespeichermodul (5a-d), vorzugsweise einer Mehrzahl von Wärmespeichermodulen (5a-d), wobei wenigstens ein Wärmespeichermodul (5a-d) von kälterem Trägergas (2), insbesondere von Kaltluft, durchströmt und Wärme von dem Wärmespeichermaterial an das kältere Trägergas (2) zur Erhitzung des Trägergases (2) übertragen wird und wobei erhitztes Trägergas (2) mit einer bestimmten Entladungstemperatur aus dem Wärmespeichermodul (5a-d) austritt, und
- Nutzung der an das Trägergas (2) übertragenen Wärme in einem Prozess zur Stromerzeugung und/oder zur Wasserstofferzeugung, nach einem der vorhergehenden Ansprüche, **dadurch gekennzeichnet, dass** bei der Entladung in wenigstens einem Wärmespeichermodul (5a-d) erhitztes Trägergas (2) direkt mit heißem Trägergas (2) aus dem Gaserhitzer (4a-d) zur Einstellung einer bestimmten Solltemperatur für die Wärmenutzung in einem Prozess zur Strom- und/oder Wasserstofferzeugung vermischt wird.

11. Verfahren nach einem der vorhergehenden Ansprüche, **dadurch gekennzeichnet, dass** an das Trägergas (2) in einem Gaserhitzer (4a-d) übertragene Wärme direkt, ohne Zwischenspeicherung der Wärme in einem Wärmespeichermodul (5a-d), in einem Prozess zur Stromerzeugung und/oder Wasserstofferzeugung genutzt wird.

12. Verfahren nach einem der vorhergehenden Ansprüche, **dadurch gekennzeichnet, dass** das Trägergas (2) in einem Kreislauf geführt wird.

## Claims

1. Method for balancing load peaks in the generation of electrical energy and/or for the generation of electrical energy by utilising the heat of heated carrier gas (2) for the generation of electricity and/or for utilising the heat of heated carrier gas (2) for the generation of hydrogen, having the following steps
- Heating of carrier gas (2), in particular of hot air, in at least one gas heater (4a-d), whereby hot carrier gas (2) exits from the gas heater (4a-d) with a certain loading setpoint temperature,
- thermal charging of at least one heat storage module (5a-d) of a plurality of heat storage modules (5a-d) of a storage power plant (1) by heat release from the hot carrier gas (2) from the gas heater (4a-d) to a heat storage material of the heat storage module (5a-d),
- time-delayed thermal discharge of at least one heat storage module (5a-d), preferably a plurality of heat storage modules (5a-d), wherein at least one heat storage module (5a-d) is flowed through by colder carrier gas (2), in particular by cold air, and heat is transferred from the heat storage material to the colder carrier gas (2) for heating the carrier gas (2), heated carrier gas (2) exiting the heat storage module (5a-d) at a specific discharge temperature, and
- Utilisation of the heat transferred to the carrier gas (2) in a process for electricity generation and/or for hydrogen generation, **characterised in that** in a discharge cycle at least one heat storage module (5a-d) with a lower heat storage temperature and/or a lower usable heat content is completely discharged and at least one heat storage module (5a-d) with a higher heat storage temperature and/or a higher usable heat content is only partially discharged.

2. Method according to claim 1, **characterised in that** a heat transfer of carrier gas (2) heated in at least one heat storage module (5a-d) to a working fluid (7) of a power plant process for electricity generation, in particular a steam power process, is provided.

3. Method according to claim 1 or 2, **characterised in that** purely electrical heating of the carrier gas (2) is provided in at least one electrical air heater (9) by converting electrical energy into thermal energy.

4. Method according to one of the preceding claims, **characterised in that**, during charging, a plurality of heat storage modules (5a-d) are connected in series and are subsequently flowed through by heated carrier gas (2), wherein, preferably, an at least paired control of a plurality of heat storage modules (5a-d) is provided.

5. Method for balancing load peaks in the generation of electrical energy and/or for the generation of electrical energy by utilising the heat of heated carrier gas (2) for the generation of electricity and/or for utilising the heat of heated carrier gas (2) for the generation of hydrogen, having the following steps
- Heating of carrier gas (2), in particular hot air, in at least one gas heater (4a-d), whereby hot carrier gas (2) exits the gas heater (4a-d) at a specific loading setpoint temperature,
- thermal charging of at least one heat storage module (5a-d) of a plurality of heat storage modules (5a-d) of a storage power plant (1) by heat release from the hot carrier gas (2) from the gas heater (4a-d) to a heat storage material of the heat storage module (5a-d),
- time-delayed thermal discharge of at least one heat storage module (5a-d), preferably of a plurality of heat storage modules (5a-d), wherein at least one heat storage module (5a-d) is flowed through by colder carrier gas (2), in particular by cold air, flowing through and heat being transferred from the heat storage material to the colder carrier gas (2) for heating the carrier gas (2), and heated carrier gas (2) emerging from the heat storage module (5a-d) at a specific discharge temperature, and utilisation of the heat transferred to the carrier gas (2) in a process for electricity generation and/or for hydrogen generation, **characterised in that** a plurality of heat storage modules (5a-d) connected in series form a heat storage row and, during charging, are subsequently flowed through by heated carrier gas (2), the charging of a subsequent heat storage module (5b-d) of the heat storage row being effected at least partially by direct supply of hot carrier gas (2) from a gas heater (4a-d).

6. Method according to claim 5, **characterised in that** the charging of a subsequent heat storage module (5b-d) of the heat storage row is carried out at least partially by direct supply of hot carrier gas (2) from a gas heater (4a-d) if the outlet temperature of the carrier gas from a preceding heat storage module (5a-c) of the heat storage row falls below a predetermined minimum temperature for the charging of the subsequent heat storage module (5b-d).

7. Method according to one of the preceding claims, **characterized in that** a plurality of heat storage modules (5a-d) are loaded in parallel, wherein a separate hot carrier gas flow is supplied to each heat storage module (5a-d) and wherein, preferably, an at least paired control of a plurality of heat storage modules (5a-d) is provided.

8. Method according to one of the preceding claims, **characterized in that** a plurality of heat storage modules (5a-d) are discharged in parallel, wherein a separate cold carrier gas flow is supplied to each heat storage module (5a-d) and wherein, preferably, an at least paired control of a plurality of heat storage modules (5a-d) is provided.

9. Method according to one of the preceding claims, **characterised in that**, during discharge in at least one heat storage module (5a-d), heated carrier gas (2) is mixed with colder carrier gas (2) and/or with cold air for setting a specific target temperature for heat utilisation in a process for electricity and/or hydrogen generation.

10. Method for balancing load peaks in the generation of electrical energy and/or for the generation of electrical energy by utilising the heat of heated carrier gas (2) for the generation of electricity and/or for utilising the heat of heated carrier gas (2) for the generation of hydrogen, having the following steps
- Heating of carrier gas (2), in particular hot air, in at least one gas heater (4a-d), whereby hot carrier gas (2) exits the gas heater (4a-d) at a specific loading setpoint temperature,
- thermal charging of at least one heat storage module (5a-d) of a plurality of heat storage modules (5a-d) of a storage power plant (1) by heat release from the hot carrier gas (2) from the gas heater (4a-d) to a heat storage material of the heat storage module (5a-d),
- time-delayed thermal discharge of at least one heat storage module (5a-d), preferably of a plurality of heat storage modules (5a-d), wherein at least one heat storage module (5a-d) is flowed through by colder carrier gas (2), in particular by cold air, and heat being transferred from the heat storage material to the colder carrier gas (2) in order to heat the carrier gas (2), and heated carrier gas (2) emerging from the heat storage module (5a-d) at a specific discharge temperature, and
- Utilisation of the heat transferred to the carrier gas (2) in a process for electricity generation and/or for hydrogen generation, **characterised,**
**in that**, during discharge in at least one heat storage module (5a-d), heated carrier gas (2) is mixed directly with hot carrier gas (2) from the gas heater (4a-d) for setting a specific setpoint temperature for heat utilisation in a process for electricity and/or hydrogen generation.

11. Method according to one of the preceding claims, **characterised in that** heat transferred to the carrier gas (2) in a gas heater (4a-d) is used directly, without intermediate storage of the heat in a heat storage module (5a-d), in a process for electricity generation and/or hydrogen generation.

12. Method according to one of the preceding claims, **characterised in that** the carrier gas (2) is circulated.

## Revendications

1. Procédé permettant de compenser des pointes de charge lors de la production d'énergie électrique et/ou destiné à produire de l'énergie électrique en utilisant la chaleur d'un gaz porteur (2) chauffé pour produire de l'électricité et/ou à utiliser la chaleur d'un gaz porteur (2) chauffé pour produire de l'hydrogène, comportant les étapes suivantes
- le chauffage du gaz porteur (2), en particulier de l'air chaud, dans au moins un réchauffeur de gaz (4a-d), dans lequel le gaz porteur (2) chaud sort du réchauffeur de gaz (4a-d) à une température de consigne de charge déterminée,
- la charge thermique d'au moins un module d'accumulateur de chaleur (5ad) d'une pluralité de modules d'accumulateur de chaleur (5a-d) d'une centrale à accumulation (1) par dégagement de chaleur du gaz porteur (2) chaud du réchauffeur de gaz (4a-d) à une matière d'accumulateur de chaleur du module d'accumulateur de chaleur (5a-d),
- la décharge thermique différée de l'au moins un module d'accumulateur de chaleur (5a-d), de préférence de la pluralité de modules d'accumulateur de chaleur (5a-d), dans lequel un gaz porteur (2) plus froid, en particulier l'air froid, circule à travers l'au moins un module d'accumulateur de chaleur (5ad) et la chaleur de la matière d'accumulateur de chaleur est transférée au gaz porteur (2) plus froid pour chauffer le gaz porteur (2), le gaz porteur (2) chauffé sortant du module d'accumulateur de chaleur (5a-d) à une température de décharge déterminée, et
- l'utilisation de la chaleur transférée au gaz porteur (2) dans un procédé de production d'électricité et/ou de production d'hydrogène, **caractérisée en ce que** dans un cycle de décharge au moins un module d'accumulateur de chaleur (5a-d), à une température d'accumulateur de chaleur inférieure et/ou à une capacité thermique utilisable inférieure, est entièrement déchargé et au moins un module d'accumulateur de chaleur (5a-d), à une température d'accumulateur de chaleur supérieure et/ou à une capacité thermique utilisable supérieure, n'est que partiellement déchargé.

2. Procédé selon la revendication 1, **caractérisé en ce que** le transfert de chaleur du gaz porteur (2) chauffé dans l'au moins un module d'accumulateur de chaleur (5a-d) à un fluide de travail (7) d'un processus de centrale électrique est fourni pour produire du courant, en particulier d'un processus de centrale thermique.

3. Procédé selon la revendication 1 ou 2, **caractérisé en ce qu'**un chauffage purement électrique du gaz porteur (2) est fourni dans au moins un réchauffeur d'air (9) électrique par conversion de l'énergie électrique en énergie thermique.

4. Procédé selon l'une quelconque des revendications précédentes, **caractérisé en ce que** lors de la charge, plusieurs modules d'accumulateur de chaleur (5a-d) sont connectés en série et ensuite traversés par un gaz porteur (2) chauffé, dans lequel, de préférence, une commande, au moins par paire, de plusieurs modules d'accumulateur de chaleur (5a-d) est fournie.

5. Procédé de compensation des pointes de charge lors de la production d'énergie électrique et/ou destiné à produire de l'énergie électrique en utilisant la chaleur d'un gaz porteur (2) chauffé pour produire de l'électricité et/ou à utiliser la chaleur d'un gaz porteur (2) chauffé pour produire de l'hydrogène, comportant les étapes suivantes
- le chauffage du gaz porteur (2), en particulier de l'air chaud, dans au moins un réchauffeur de gaz (4a-d), dans lequel le gaz porteur (2) chaud sort du réchauffeur de gaz (4a-d) à une température de consigne de charge déterminée,
- la charge thermique d'au moins un module d'accumulateur de chaleur (5ad) d'une pluralité de modules d'accumulateur de chaleur (5a-d) d'une centrale électrique d'accumulation (1) par dégagement de chaleur du gaz porteur (2) chaud du réchauffeur de gaz (4a-d) à une matière d'accumulateur de chaleur du module d'accumulateur de chaleur (5a-d),
- la décharge thermique différée de l'au moins un module d'accumulateur de chaleur (5a-d), de préférence de la pluralité de modules d'accumulateur de chaleur (5a-d), dans lequel l'au moins un module d'accumulateur de chaleur (5a-d) est traversé par un gaz porteur (2) plus froid, en particulier par l'air froid, et la chaleur de la matière d'accumulateur de chaleur est transférée au gaz porteur (2) plus froid pour chauffer le gaz porteur (2) et dans lequel le gaz porteur (2) chauffé sort du module d'accumulateur de chaleur (5a-d) à une température de décharge déterminée, et l'utilisation de la chaleur transférée au gaz porteur (2) dans un processus de production d'électricité et/ou de production d'hydrogène, **caractérisé en ce que** la pluralité de modules d'accumulateur de chaleur (5a-d) connectés en série forment une série d'accumulateurs de chaleur et, lors de la charge, sont ensuite traversés par le gaz porteur (2) chauffé, dans lequel la charge d'un module d'accumulateur de chaleur (5b-d) suivant de la série d'accumulateurs de chaleur s'effectue, au moins partiellement, par alimentation directe du gaz porteur (2) chaud à partir d'un réchauffeur de gaz (4a-d).

6. Procédé selon la revendication 5, **caractérisé en ce que** la charge d'un module d'accumulateur de chaleur (5b-d) suivant dans la série d'accumulateurs de chaleur s'effectue, au moins partiellement, par alimentation directe du gaz porteur (2) chaud à partir d'un réchauffeur de gaz (4a-d) lorsque la température de sortie du gaz porteur d'un module d'accumulateur de chaleur (5a-c) précédent de la série d'accumulateurs de chaleur est inférieure à une température minimale prédéterminée pour la charge du module d'accumulateur de chaleur (5b-d) suivant.

7. Procédé selon l'une quelconque des revendications précédentes, **caractérisé en ce que** plusieurs modules d'accumulateur de chaleur (5a-d) sont chargés en parallèle, dans lequel chaque module d'accumulateur de chaleur (5a-d) est alimenté par un courant de gaz porteur chaud séparé et dans lequel, de préférence, une commande au moins par paire d'une pluralité de modules d'accumulateur de chaleur (5a-d) est fournie.

8. Procédé selon l'une quelconque des revendications précédentes, **caractérisé en ce que** plusieurs modules d'accumulateur de chaleur (5a-d) sont déchargés en parallèle, dans lequel chaque module d'accumulateur de chaleur (5a-d) est alimenté par un courant de gaz porteur plus froid séparé et dans lequel, de préférence, une commande au moins par paire d'une pluralité de modules d'accumulateur de chaleur (5a-d) est fournie.

9. Procédé selon l'une quelconque des revendications précédentes, **caractérisé en ce que** lors de la décharge dans l'au moins un module d'accumulateur de chaleur (5a-d), le gaz porteur (2) chauffé est mélangé avec du gaz porteur (2) plus froid et/ou avec de l'air froid pour régler une température de consigne déterminée pour l'utilisation de la chaleur dans un processus de production d'électricité et/ou d'hydrogène.

10. Procédé de compensation des pointes de charge lors de la production d'énergie électrique et/ou destiné à produire de l'énergie électrique en utilisant la chaleur d'un gaz porteur (2) chauffé pour produire de l'électricité et/ou à utiliser la chaleur d'un gaz porteur (2) chauffé pour produire de l'hydrogène, comportant les étapes suivantes
- le chauffage du gaz porteur (2), en particulier de l'air chaud, dans au moins un réchauffeur de gaz (4a-d), dans lequel le gaz porteur (2) chaud sort du réchauffeur de gaz (4a-d) à une température de consigne de charge déterminée,
- la charge thermique d'au moins un module d'accumulateur de chaleur (5ad) d'une pluralité de modules d'accumulateur de chaleur (5a-d) d'une centrale électrique d'accumulation (1) par dégagement de chaleur du gaz porteur (2) chaud du réchauffeur de gaz (4a-d) à une matière d'accumulateur de chaleur du module d'accumulateur de chaleur (5a-d),
- la décharge thermique différée de l'au moins un module d'accumulateur de chaleur (5a-d), de préférence de la pluralité de modules d'accumulateur de chaleur (5a-d), dans lequel un gaz porteur (2) plus froid, en particulier l'air froid, circule à travers l'au moins un module d'accumulateur de chaleur (5ad) et la chaleur de la matière d'accumulateur de chaleur est transférée au gaz porteur (2) plus froid pour chauffer le gaz porteur (2), et dans lequel le gaz porteur (2) chauffé sort du module d'accumulateur de chaleur (5a-d) à une température de décharge déterminée, et
- l'utilisation de la chaleur transférée au gaz porteur (2) dans un processus de production d'électricité et/ou de production d'hydrogène, selon l'une quelconque des revendications précédentes, **caractérisée en ce que** lors de la décharge dans l'au moins un module d'accumulateur de chaleur (5a-d) le gaz porteur (2) chauffé est mélangé directement avec le gaz porteur (2) chaud du réchauffeur de gaz (4a-d) pour régler une température de consigne prédéterminée pour l'utilisation de la chaleur dans un processus de production d'électricité et/ou d'hydrogène.

11. Procédé selon l'une quelconque des revendications précédentes, **caractérisé en ce que** la chaleur transférée directement au gaz porteur (2) dans un réchauffeur de gaz (4a-d), est utilisée, sans stockage intermédiaire de la chaleur dans un module d'accumulateur de chaleur (5a-d), dans un processus de production d'électricité et/ou de production d'hydrogène.

12. Procédé selon l'une quelconque des revendications précédentes, **caractérisé en ce que** le gaz porteur (2) est guidé dans un circuit.
